# EUROPÄISCHE PATENTANMELDUNG

(11) **EP 2 410 213 A2**
(43) Veröffentlichungstag der Anmeldung: **25.01.2012**
(21) Anmeldenummer: 11174675.6
(22) Anmeldetag: 20.07.2011
(51) Int. Cl.: F16H 61/688, F16D 48/02, F16H 61/02

(54) **Getriebehydraulik eines Getriebes mit mehreren Kupplungen und Steuerungsverfahren mit hydraulischen Ventilen für mehrere Kupplungen umfassende Getriebe, die eine erhöhte Betriebssicherheit bieten**

(30) Priorität: 21.07.2010 DE 102010036545; 31.08.2010 DE 102010037243
(71) Anmelder: hofer mechatronik GmbH, 72644 Oberboihingen (DE)
(72) Erfinder: Naumann, Ralf, 73275 Ohmden (DE); Stehli, Thomas, 72631 Aichtal-Aich (DE)
(74) Vertreter: Cremer & Cremer

(57) **Zusammenfassung**

Die vorliegende Erfindung betrifft ein Getriebe (1) für ein Kraftfahrzeug mit mehreren Kupplungen, die als Doppelkupplungseinrichtung (11) mit einer hydraulischen Steuerung arrangiert sind, sowie geeignete Bauteile wie ein Muffenwahlventil (220,220',220'',220''';222,222',222'',222''') für eine solche hydraulische Getriebesteuerung. Weiterhin bezieht sich die Erfindung auf ein geeignetes Verfahren des Betriebs einer Getriebehydraulik für eine Doppelkupplungseinrichtung (11). Eine hydraulisch steuerbare Mehrkupplungseinrichtung ist mit einem hohen Maß an integrierter Sicherheit für ein Kraftfahrzeug zu gestalten.

Das Getriebe ist als ein mit mehreren Schaltmuffen (5) ausgestattetes Schaltgetriebe ausgebildet, wobei mit der Doppelkupplungseinrichtung (11) ein erstes Teilgetriebe (13) und ein zweites Teilgetriebe (15) des Schaltgetriebes beeinflussbar ist. Jedes Teilgetriebe (13,15) besitzt Steuerungselemente mit zweiseitig hydraulisch ansteuerbaren Schaltaktuatoren (202,204,206,208), wobei jeweils zwei Schaltaktuatoren (202,204;206,208) einem Muffenwahlventil zugeordnet sind. In einer ersten Stellung eines Muffenwahlventils sind zwei Durchflusswege (224,226) für eine Beaufschlagung eines Schaltaktuators (202,204,206,208) mit Drucköl einem ersten Schaltaktuator, und zwei Wege mit Verbindung zu einem Druckölsumpf (102) einem zweiten Schaltaktuator zugeordnet. In einer zweiten Stellung des Muffenwahlventils ist die Zuordnung umgekehrt.

## Beschreibung

Die vorliegende Erfindung betrifft ein Getriebe mit mehreren Kupplungen, die als Doppelkupplungseinrichtung arrangiert sein können, mit einer hydraulischen Steuerung sowie geeignete Bauteile, wie ein Muffenwahlventil, für eine solche hydraulische Getriebesteuerung und ein geeignetes Verfahren des Betriebs der Getriebehydraulik.

### Stand der Technik

Getriebe mit mehreren Kupplungen in Kraftfahrzeugen werden unter anderem unter dem Schlagwort "Doppelkupplungsgetriebe" angepriesen. Mit diesem Begriff werden unterschiedlichste Varianten bezeichnet, die fast nicht mehr zählbar sind. Die Varianten unterscheiden sich unter anderem durch die Anzahl an Gänge, zum Beispiel ob sechs, sieben oder mehr Vorwärtsgänge vorhanden sind, die Art und Weise, wie ein Rückwärtsgang in dem Getriebe realisiert ist, und durch die Betriebsweise des Getriebes.

Beispielhaft mögen einige Doppelkupplungsgetriebe durch ihre druckschriftlichen Beschreibungen angesprochen werden. So schlägt zum Beispiel die FR 2 848 629 B1 (Patentinhaberin: Renault SAS; Anmeldetag: 12.12.2002) vor, mit einer gemeinsamen Schaltgabel die diversen Gänge einlegen zu können. Ereignet sich bei einem solchen Getriebe ein Schaden an der Schaltachse, so dürfte ein Weiterbetrieb eines Kraftfahrzeuges mit einer solchen Art Doppelkupplungsgetriebe in vielen Fällen ausgeschlossen sein.

Die europäische Patentanmeldung EP 2 055 989 A1 (Anmelderin: Ford Global Technologies LLC; Anmeldetag: 29.10.2007) beschreibt ein Doppelkupplungsgetriebe, bei dem die Gänge in einer ganz bestimmten Weise auf den Vorgelegewellen angeordnet sind, wobei der sechste Gang und der Rückwärtsgang durch gemeinsame Zahnradpaare gebildet werden. Von dem jeweils gleichen Antriebsrad soll durch ein erstes Antriebsrad sowohl der dritte als auch der fünfte Gang und durch ein zweites Antriebsrad sowohl der vierte als auch der sechste Gang angetrieben werden. Bei Teilausfällen von Getrieben, die gem. der Beschreibung der EP 2 055 989 A1 aufgebaut sind, dürfte eine Manövrierbarkeit des Fahrzeuges in vielen Fällen aufgrund der Gangverteilungen und der gewählten Radsatzpaarbildungen ausgeschlossen sein. In ähnlicher Weise schlägt die DE 10 2007 010 292 A1 (Anmelderin: Audi AG; Anmeldetag: 02.03.2007) vor, Gangstufen je eines Teilgetriebes einander benachbart anzuordnen und mittels eines gemeinsamen Aktuators schaltbar oder vorwählbar auszuführen. Tritt eine Schwierigkeit in der Steuerbarkeit eines solchen Aktuators auf, so ist nicht nur eine Gangstufe eines Teilgetriebes betroffen, sondern einander benachbart angeordnete Gangstufen lassen sich nicht mehr steuern, denn der gemeinsame Aktuator ist für die benachbarten Gänge manövrierunfähig.

Darüber hinaus droht bei vielen Doppelkupplungsgetrieben die Gefahr, sollte bei einem Teilgetriebe die Möglichkeit gegeben sein, dass zwei unterschiedliche Gänge gleichzeitig eingelegt sind, dass das Getriebe mechanisch zerstört wird. Viele Entwickler von Doppelkupplungsgetrieben tendieren dazu, Sicherheits- und Überwachungsfunktionen in ein Steuergerät, einen Steuerungseinheit, softwaremäßig zu verlagern, sodass im Ergebnis das Steuergerät die Beschädigungen des Getriebes verhindern soll. Wie mit unterschiedlichen "Flags", die softwaremäßig zu setzen sind, gearbeitet werden muss, damit nicht unerwünschte Gangwechsel, insbesondere zwischen einem Vorwärtsgang und einem Rückwärtsgang, stattfinden können, bei den zuvor beschriebenen Getrieben stattfinden können, wird in der US 2009 045 026 A1 (Anmelderin: Kanzaki Kokyukoki Mfg. Co. Ltd.; Prioritätstag: 17.08.2007), auch als EP 2 025 972 A2 veröffentlicht, beschrieben.

Ein weiteres, umfangreicheres Zusammenspiel zwischen Steuergerät, das in der Patentanmeldung EP 1 449 708 A1 (Anmelderin: BorgWarner Inc.; Prioritätstag: 21.02.2003) als ECU bezeichnet ist, und einer einige Ventile umfassenden hydraulischen Kupplungssteuerung kann dieser Druckschrift entnommen werden. Auch diese Druckschrift ist stark von der Überlegung geleitet, dass softwaremäßig alles das abzufangen ist, was durch die hydraulische Schaltungsgestaltung oder durch das Getriebe selbst an Fehlerfällen auftreten kann. Die Fehlerverursacher sind nicht so auszulegen, dass diese ihre eigenen Fehler auch wieder abfangen können.

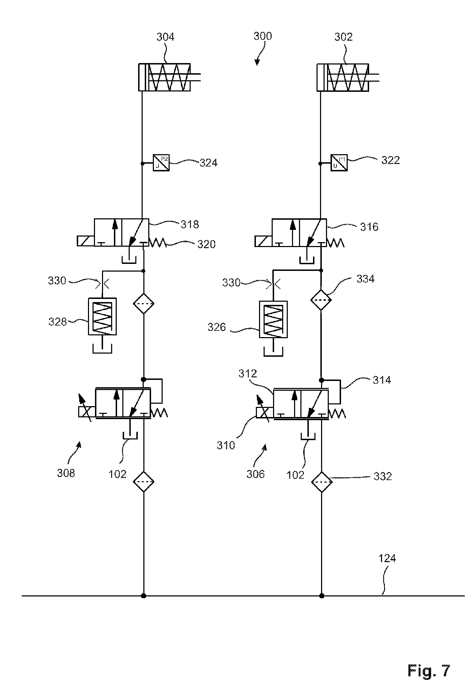

Ein robusteres hydraulisches System für mehrere Kupplungen umfassende Getriebeanordnungen lässt sich der DE 10 2006 016 397 A1 (Anmelderin: hofer mechatronik GmbH; Anmeldetag: 07.04.2006) entnehmen. Wie den Figuren 7, 8, 9 und 10 zu entnehmen ist, hängen die einzelnen hydraulischen Teilkreise, wie die Kreise für die Kupplungsbetätigungen und die Aktuatorenkreisläufe für die Muffenbetätigungen an einer zentralen Versorgungsleitung, die durch eine Hydraulikpumpe, die auch als Öldruckpumpe zu bezeichnen ist, beaufschlagbar ist. Den hydraulischen Plänen ist das Konzept zu entnehmen, dass die einzelnen Funktionsgruppen, wie zum Beispiel das erste Teilgetriebe, das zweite Teilgetriebe, die erste Kupplung und die zweite Kupplung, möglichst unabhängig von den anderen hydraulisch angesteuerten Baugruppen betätigbar bleiben, solange die Pumpe den hydraulischen Druck halten kann. Aus den hydraulischen Plänen sind einige integrierte Sicherheitsfunktionen herauszulesen.

Von diesem zukunftsweisenden Konzept wieder abgewandt, propagiert die WO 2008 108 977 A1 (Anmelderin: BorgWarner Inc.; Prioritätstag: 02.03.2007), die auch als CN 101 583 510 A bekannt ist, die Verquickung der natürlichen, aufgrund der mechanischen Gegebenheiten sich bildenden Teilfunktionen durch eine gemeinsame hydraulische Ansteuerung, zum Beispiel indem zwei hintereinander angeordnete Multiplexventile verwendet werden, mit denen die Muffenwahl realisiert wird. Die Baugruppen beziehen das Drucköl von einer gemeinsamen, durch eine Pumpe aufgeladenen Zentralleitung. Anschließend wird aber das gesamte Getriebe durch möglichst komplex realisierte Ventile angesteuert. Die Beschreibung scheint eher dem Prinzip der Ventileinsparung als dem Prinzip der gesteigerten hydraulischen Sicherheitsfunktionsintegration verschrieben zu sein.

So ähnliche Konzepte sind, wie z. B. in der DE 102 05 619 A1 (Anmelderin: LuK Lamellen und Kupplungsbau BeteiligungsKG; Prioritätstag: 12.02.2001) beschrieben, von den nur mit einer Kupplung realisierten Getrieben mit einer geringeren Anzahl Gängen ebenfalls bekannt. Die DE 102 05 619 A1 beschreibt ein Steuerventil, in das Funktionen zweier Stellglieder integriert sind, von denen das eine Stellglied für die Gassenwahl X und das andere Stellglied für die Gangwahl Y zuständig ist.

Die EP 1 717 473 A1 (Anmelderin: Hoerbinger Antriebstechnik GmbH; Anmeldetag: 25.04.2005), die auch als CN 101 163 901 A bekannt ist, befasst sich mit einem Auszug aus der hydraulischen Ansteuerung einer zwei Kupplungen umfassenden Getriebeeinheit und schlägt vor, das als Füllventil bezeichnete vorgeschaltete Ventil als Proportional-Regelventil auszuführen, während das zweite Ventil, das sich unmittelbar anschließen sollte, ein Zweistellungsventil sein sollte.

Mit einem Konzept für die Entlastung einzelner Kammern der doppelt belegten Gangsteller, die auch als Schaltaktuatoren bezeichnet werden können, wartet die US 2006/234 826 A1 auf, die auch als CN 1 844 717 A bekannt ist. Das Konzept weist ein Gruppenwahlventil vor zwei Kammerwahlventilen hydraulisch verschaltet auf. Durch die hydraulische Verschaltung zweier Ventile kann eine Entlastung von nicht benötigten Gangstellern nur dann sichergestellt werden, wenn beide Ventile ordnungsgemäß angesteuert werden. Den Ventilen sind hydraulische Vorsteuerventile zur Betätigung vorgeschaltet. Fällt also z. B. ein Vorsteuerventil aus, so arbeiten die restlichen drei Ventile auch nicht mehr einwandfrei, obwohl sie keine Funktionsstörung im eigentlichen Sinne aufweisen. Das in der US 2006/234 826 A1 vorgestellte Konzept basiert also auf der (unausgesprochenen) Annahme, dass die Steuerventile fehlerfrei sind. Das in der Druckschrift vorgestellte Notfallkonzept basiert darauf, Signalelementefehler abfangen zu können.

Die in den zuvor zitierten Druckschriften dargestellten Varianten von Doppelkupplungsgetrieben dienen der Verdeutlichung, für welche Art von Getrieben die vorliegende Erfindung eingesetzt werden kann. Zur Vermeidung von Wiederholungen sei auf die zitierten Druckschriften verwiesen, wenn grundlegende mechanische, hydraulische und elektrotechnische bzw. steuerungstechnische Aspekte von Doppelkupplungsgetrieben für die nachfolgende Erfindungsbeschreibung zu definieren sind.

### Technisches Gebiet

Nicht zuletzt dank des gesteigerten Fahrgefühls bei lastunterbrechungsfreien Gangwechsel erfreuen sich Doppelkupplungsgetriebe besonderer Beliebtheit in leistungsstarken bzw. mit PSstarken Motoren ausgestatteten Personenkraftfahrzeugen, bei denen ein Drehmoment von mehreren hundert Newtonmetern über die Kupplung auf die Räder zu bringen ist. Bei hohen Leistungen und hohen Drehmomenten ist die Notwendigkeit der Integration von Sicherheitsfunktionen und Sicherheitsaspekten in jede funktionelle Schicht und jede Entwurfsebene des Getriebes erst recht erwünscht.

Ein Doppelkupplungsgetriebe weist in der Regel zwei Getriebeeingangswellen auf, denen jeweils eine separate Kupplung und eine Gruppe von Gangstufen zugeordnet sind. In einer besonders vorteilhaften Radsatzanordnung umfasst eine Gruppe die Gangstufen mit ungerader Ordnungszahl, während die andere Gruppe die Gangstufen mit gerader Ordnungszahl einschließlich des Rückwärtsganges aufweist.

In einem derart ausgebildeten Doppelkupplungsgetriebe besteht ein Schaltvorgang, d. h. ein Wechsel von einem wirksamen Quellgang in einen nächsthöheren oder nächstniedrigeren Zielgang, aus mehreren Stufen. Als erstes wird ein Zielgang eingelegt, was z. B. über eine entsprechende Schaltmuffe und eine einem Gangrad des Zielganges zugeordnete synchronisierte Gangschaltkupplung bewerkstelligt werden kann. Anschließend erfolgt ein überschnittenes Öffnen einer der Getriebeeingangswelle des Quellganges zugeordneten ersten Kupplung und Schließen einer der Getriebeeingangswelle des Zielganges zugeordneten zweiten Kupplung. Außerhalb der Schaltvorgänge erfolgt die Kraftübertragung jeweils wechselweise über eine der Getriebeeingangswellen.

Ein wesentlicher Vorteil eines solchen Doppelkupplungsgetriebes gegenüber einem konventionellen Stufenwechselgetriebe liegt in den weitgehend zugkraftunterbrechungsfreien Schaltvorgängen.

Ein unmittelbares Ergebnis ist ein besseres Beschleunigungsvermögen im Zugbetrieb und ein besseres Verzögerungsvermögen im Schubbetrieb. Darüber hinaus werden durch eine Überbrückung von Lastspielen zwischen Bauteilen des Antriebsstranges bedingte Schlaggeräusche weitgehend vermieden. Als wichtiger Aspekt für die Benutzer von Fahrzeugen mit Doppelkupplungsgetrieben ist auch der Aspekt des Fahrkomforts, der dadurch verbessert ist.

Da bei manueller Betätigung von zwei Motorkupplungen und der Schaltung der Gänge mit vorübergehend zwei gleichzeitig eingelegten Gängen ein erheblicher mechanischer Aufwand erforderlich wäre, sind Doppelkupplungsgetriebe zumeist automatisiert ausgebildet. Dabei erfolgt sowohl die Betätigung der Motorkupplungen als auch das Schalten der Gänge über zugeordnete Hilfsantriebe, die z. B. elektromagnetisch, elektromotorisch, hydraulisch oder in anderer, z. B. gemischter Weise betätigbar sein können.

Eine hydraulische Steuerung eines Getriebes mit mehreren Kupplungen, insbesondere eines Doppelkupplungsgetriebes, erfordert einen höheren Aufwand an Steuermechanismen im Vergleich zu herkömmlichen Einkupplungsgetrieben. Bei hydraulischer Steuerung eines Getriebes können Schaltmuffen und Kupplungen des Getriebes durch Schaltaktuatoren, z. B. Schaltzylinder der Muffen, z. B. doppelseitig ansteuerbare Schaltzylinder, und Hydraulikzylinder der Kupplungen über Druckventile betätigt werden.

Die Sicherheitsaspekte betreffen sowohl ein zuverlässiges Funktionieren des Getriebes im Normalbetriebsmodus als auch ein Verhalten des Getriebes bei Ausfall eines Steuerungselementes und eine Möglichkeit zur weiteren Betätigung des Getriebes in einem Notbetriebmodus. Dabei treten insbesondere bei Doppelkupplungsgetrieben zunehmend Probleme einer sicheren Arbeit des Getriebes in Erscheinung, die durch eine große Anzahl von Steuerungselementen oder durch einen komplizierten Aufbau eines oder mehrerer Steuerungselemente hervorgerufen werden.

### Problemstellung

Es ist erstrebenswert, eine hydraulisch steuerbare Doppelkupplungseinrichtung oder eine hydraulisch steuerbare Mehrkupplungseinrichtung eines Getriebes für ein Kraftfahrzeug so zu gestalten, dass der hydraulische Schaltplan sowohl in Getrieben leistungsstarker Antriebsstränge als auch kleinmotorigen und unter erhöhten wirtschaftlichen Zwängen stehenden Antriebssträngen eingebaut werden kann und trotzdem ein hohes Maß an integrierter Sicherheit aufgrund des Schaltungsentwurfs vorhanden ist.

### Erfindungsbeschreibung

Die erfindungsgemäße Aufgabe wird durch Getriebe nach Anspruch 1 und Anspruch 20 gelöst. Ein Muffenwahlventil, so wie in Anspruch 28 beschrieben, trägt zur Steigerung der integrierten Sicherheit bei. Wie ein solches Getriebe während eines Gangwechsels funktioniert, kann dem Anspruch 31 entnommen werden. Vorteilhafte Weiterbildungen lassen sich den abhängigen Ansprüchen entnehmen.

Viele integrierte Sicherheitsfunktionen sind aus den hydraulischen Plänen herauszulesen. Ausgehend aus den Anforderungen der Sicherheit und Wirtschaftlichkeit ist dem hydraulischen Aufbau das Konzept zugrunde gelegt, dass die einzelnen Funktionsgruppen, wie zum Beispiel das erste Teilgetriebe, das zweite Teilgetriebe, die erste Kupplung und die zweite Kupplung, möglichst unabhängig von anderen hydraulisch angesteuerten Baugruppen betätigbar bleiben.

Das Getriebe ist zum Einsatz in einem Kraftfahrzeug geeignet, weil es die kraftfahrzeugspezifischen Sicherheitsanforderungen in einem besonderen Maße berücksichtigt. So wie standardmäßig und in üblicher Weise ein Getriebe realisiert ist, hat das erfindungsgemäße Getriebe mehrere Schaltmuffen. Die mehreren Schaltmuffen sind in dem Schaltgetriebe angeordnet, damit ein einzelner Gang ein- oder ausgelegt werden kann. Das Schaltgetriebe weist daher mehrere Schaltmuffen als Elemente für die Gangwahl auf. Das Getriebe ist mit einer mehrere Kupplungen und Kupplungszylinder umfassenden Kupplungseinrichtung beeinflussbar.

Die hydraulische Einrichtung des Getriebes umfasst neben einer Druckmittelquelle mit einem Druckmittel, z. B. einer Anordnung mit einer Ölpumpe oder mehreren Ölpumpen unterschiedliche hydraulische Steuerungselemente mit hydraulischen Zuleitungen, Ableitungen und inneren Leitungen, Verbindungen und Wegen für ein Druckmittel, z. B. für Öl, das aus einem Ölsumpf an einer Niederdruckseite einer Pumpe für Öl eingesaugt wird und als Drucköl von einer Hochdruckseite einer Ölpumpe in eine Drucköl-Zuleitung eingepumpt wird, und nach einer Zirkulation in Druckölzu- und -ableitungen (wenigstens teilweise) zu einem Druckölsumpf mit einem niedrigen Öldruck kommt.

Um bessere dynamische Eigenschaften des Getriebes zu erzielen, sind die mehreren Muffen auf mehreren Teilgetrieben, z. B. wenigstens auf einem ersten Teilgetriebe und einem zweiten Teilgetriebe des Schaltgetriebes, verteilt.

Dabei arbeitet das mit mehreren Schaltmuffen ausgebildete Schaltgetriebe mit einer mehrere Kupplungen umfassenden Doppelkupplungseinrichtung zusammen. Die mehrere Kupplungen umfassende Doppelkupplungseinrichtung hat wenigstens eine erste Kupplung mit einem ersten Hydraulikzylinder und wenigstens eine zweite Kupplung mit einem zweiten Hydraulikzylinder. Mit dieser Doppelkupplungseinrichtung sind ein erstes Teilgetriebe und ein zweites Teilgetriebe des Schaltgetriebes beeinflussbar. Dabei kann z. B. eine erste Kupplung ein erstes Teilgetriebe und eine zweite Kupplung ein zweites Teilgetriebe beeinflussen. Dies kann abhängig vom Betriebsvorgang zu unterschiedlichen Zeitpunkten oder in sich überschneidenden Zeitintervallen oder sogar gleichzeitig, z. B. synchron, geschehen oder durchgeführt werden. Dabei kann z. B. ein Vorgang eines Gangausschaltens in einem Teilgetriebe und ein Vorgang eines Gangeinschaltens in einem anderen Teilgetriebe mit einer großen Flexibilität durchgeführt werden.

Zur Betätigung der Gangschaltung besitzt jedes Teilgetriebe Steuerungselemente. Zum Beispiel besitzt jedes Teilgetriebe Steuerungselemente mit zweiseitig hydraulisch ansteuerbaren Schaltaktuatoren zum Bewegen der Schaltmuffen. Bei einer zweiseitigen Ansteuerung eines Aktuators kann eine an den Schaltaktuator angeschlossene Schaltmuffe aus einer Ausgangsposition zu einer Zielposition in einer Richtung bewegt und natürlich auch zurückbewegt werden. Dies hat den Vorteil, dass z. B. mit einem Schaltaktuator mehr als ein Gang ein- oder ausgeschaltet werden kann. Schaltaktuatoren sind z. B. so ausgebildet und werden so angesteuert, dass ein an einen Schaltaktuator angeschlossene Schaltmuffe aus einer Ausgangsposition zu einer Zielposition in einer Richtung oder zu einer anderen Zielposition in einer anderen Richtung bewegt werden kann. Dafür können Schaltaktuatoren z. B. in einer Form mit einem beidseitig mit Drucköl beaufschlagbaren Kolben ausgebildet sein. Ein Druckmittel, z. B. Drucköl zur Druckbeaufschlagung des einen hydraulischen Zylinders, kann über ein Ventil zugeführt werden, das als ein Schaltventil oder ein Regelventil, z. B. als ein Druckregelventil, ausgebildet ist. An einem Ventil, das einem Schaltaktuator ein Druckmittel zuführt, können mehrere Schaltaktuatoren angeschlossen sein.

In einer vorteilhaften Ausgestaltung eines Getriebes sind jeweils zwei Schaltaktuatoren einem Muffenwahlventil zugeordnet. Vorteilhaft ist dabei, dass ein wirtschaftlich vorteilhafter Aufbau des Getriebes mit einer recht kleinen Anzahl an Ventilen mit einer hohen Sicherheit des Betriebs bei konstruktiv einfachen Ventilen verbunden ist. Ein Ventil, an welches zwei Schaltaktuatoren angeschlossen sind, kann z. B. zur Auswahl eines zu einem Zeitpunkt zu betätigenden Schaltaktuators dienen. Im Fall, dass die Schaltaktuatoren zur Bewegung einer Muffenanordnung mit mehreren Muffen bestimmt sind, hat das Ventil die Funktion eines Muffenwahlventils. Das Muffenwahlventil bietet verschiedene Schaltstellungen. In einer Schaltstellung sind zwei Wege mit einem Druckölsumpf verbunden. In einer zweiten Stellung sind zwei andere Wege zu dem Druckölsumpf freigeschaltet. Durch das Vorhalten von zwei Durchflusswegen durch das Muffenwahlventil kann der mit Drucköl zu beaufschlagende Schaltaktuator gleichmäßig mit dem Drucköl, dessen Druck durch den Druckregler eingestellt ist, beaufschlagt werden. Unterdessen kann in einer zweiten Stellung Drucköl genau in spiegelbildlicher Art und Weise in den Schaltaktuator eingebracht werden.

Funktional ist das Muffenwahlventil bzw. durch die äußere Verschaltung an dem Muffenwahlventil, die Anordnung selbst mit einer Schwimmstellung ausgestattet. Das Muffenwahlventil kann zwei Kammern, die einem (einzigen) Schaltaktuator zugeordnet sind, entlasten. Die Schwimmstellung kann durch viele Maßnahmen in oder an dem Muffenwahlventil erreicht werden. So können innere Verbindungen in dem Ventilkolben vorhanden sein. Alternativ oder zusätzlich können in der Hülse des Ventils eine Verbindung wie eine Verbindungsbohrung angesiedelt werden, damit das abströmende Hydraulikmittel zu dem Druckölsumpf gelangen kann.

Das Getriebe kann als Doppelkupplungsgetriebe bezeichnet werden, weil es wenigstens zwei Kupplungen aufweist, die jeweils einem eigenen Teilgetriebe zugeordnet sind. Räumlich besonders vorteilhaft sind Doppelkupplungsgetriebe, bei denen die Kupplungsantriebswellen koaxial angeordnet sind, insbesondere als eine innere Welle für die eine Kupplung und als diese in Form einer Hohlwelle umschließenden Welle für die zweite Kupplung. Das erste Teilgetriebe umfasst einen ersten Satz Gänge, das zweite Teilgetriebe umfasst einen zweiten Satz Gänge. Eine besonders vorteilhafte Anordnung ergibt sich daraus, wenn der erste, der dritte und der fünfte Gang auf dem ersten Teilgetriebe angeordnet sind und die dazu als geraden Gänge bezeichneten Gänge wie der zweite, der vierte und der sechste Gang durch das zweite Teilgetriebe gebildet werden. In einem der beiden Teilgetriebe liegt zudem der Rückwärtsgang, der somit keine gesonderte Rückwärtsgangwelle mehr benötigt, sondern auf der gleichen Vorgelegewelle angesiedelt ist, die die übrigen Gänge des Teilgetriebes.

Die Hydraulik arbeitet auf einem gewissen Druckniveau, zum Beispiel mit einem Systemdruck zwischen 15 und 30 bar, der möglichst in einem engen Druckband konstant gehalten wird, das kann zum Beispiel ein Druck von 25 bar sein. Alternativ kann der Druck natürlich auch nur auf ein Niveau von 18 bar gelegt werden.

Das als Doppelkupplungsgetriebe gestaltete Getriebe bezieht den Betriebsdruck für die Betätigung der Aktuatoren aus einer Öldruckpumpe. Viele Öldruckpumpen, sofern sie von dem Verbrennungsmotor motorisch angetrieben sind, zeigen ein drehzahlabhängiges Verhalten. Auf der Hochdruckseite, das ist die Seite, auf der das durch die Öldruckpumpe geförderte Öl unter Druck von der Öldruckpumpe zur Verfügung gestellt wird, wird je nach Drehzahl des Verbrennungsmotors eine entsprechende Volumenstrommenge des Drucköls angeboten. Die Hochdruckseite mündet vorteilhafter Weise in eine Hochdruckverteilerleitung für mehrere unterschiedliche Hydraulikkreise. Mit anderen Worten bedeutet die Verwendung einer drehzahlgeführten Öldruckpumpe, wird ein Verbrennungsmotor mit sehr hohen Drehzahlen, also hochtourig, betrieben, so liefert die Öldruckpumpe häufig zu viel Hydraulikmittel, also Hydrauliköl. In niedrigen Drehzahlbereichen muss das Öl aber trotzdem schon in einer ausreichenden Menge zur Verfügung stehen. Daher werden die Pumpen häufig im Ergebnis überdimensioniert ausgelegt. Die Öldruckpumpe folgt mit ihrem Förderverhalten der Drehzahl des Verbrennungsmotors. Bei hohen Drehzahlen fördert die Pumpe mehr als bei niedrigen Drehzahlen. Um mit dem Problem der inadäquaten Förderung zu Recht zu kommen, werden die Öldruckpumpen häufig mit einem Unter- oder Übersetzungsgetriebe ausgestattet; es bleibt aber bei der eingangs beschriebenen Situation, dass mit ansteigender Drehzahl des Verbrennungsmotors auch die Fördermenge der Öldruckpumpe ansteigt. Die Öldruckpumpe folgt mit einem synchronen Verhalten der Drehzahlentwicklung des Verbrennungsmotors. Die Öldruckpumpe läuft mit der Drehzahl des Verbrennungsmotors mit, ggf. ist ein Faktor aus dem Übersetzungsverhältnis in Bezug auf die exakte Drehzahl der Öldruckpumpe zu berücksichtigen.

Die Öldruckpumpe bezieht das Getriebeöl aus dem Sumpf des Getriebes. Die Öldruckpumpe saugt das Öl aus dem Sumpf an. Die Öldruckpumpe stellt also das angezogene Getriebeöl aus dem Sumpf des Getriebes dem Getriebe zur Verfügung. Hierbei ist nach einem weiteren Aspekt der vorliegenden Erfindung der Hydraulikleitungsführung so gestaltet, dass zumindest ein Teil des in den Leitungen vorhandenen Öls von der Öldruckpumpe im Kreis gefördert wird.

Von der Öldruckpumpe werden unterschiedliche Ölkreisläufe gespeist. Die Ölkreisläufe sind von einander möglichst weit entkoppelt. Man kann von entkoppelten Ölkreisläufen sprechen. Das bedeutet, die Ölkreisläufe beeinflussen sich nicht gegenseitig, solange die Druckölquelle, die Öldruckpumpe, ausreichend dimensioniert ist.

Nach einem Aspekt der vorliegenden Erfindung sind die Ölkreisläufe den einzelnen Hauptfunktionen des Doppelkupplungsgetriebes nachgebildet. Somit gibt es, wenn die Gangwahl in den Mittelpunkt gerückt wird, einen Ölkreislauf, der einem einzelnen Teilgetriebe entspricht. Es gibt darüber hinaus nach einem weiteren Aspekt der vorliegenden Erfindung einen Ölkreislauf, der die Temperierung des Getriebeöls durchführt. Bei längerem Betrieb und bei höheren Leistungen ist vorrangig Wärme aus dem Getriebeöl auszubringen. Ein Ölkreislauf schickt das Öl über einen Drucköl-Wärmetauscher. Der Ölkreislauf für den Drucköl-Wärmetauscher ist nebengeordnet zu einem Ölkreislauf, der z. B. für die Aktuatorenversorgung zuständig ist. In den Aktuatorenölkreisläufen können z. B. Steuerungselemente der Schaltaktoren in einer eigenen Zirkulation sitzen. Es ist ein weiterer, eigenständiger Ölkreislauf vorgesehen ist, der nebengeordnet zu Aktuatorenölkreisläufen, wie einem Ölkreislauf für Steuerungselemente der Schaltaktuatoren, eine Zirkulation für einen Teil des Getriebeöls durch eine Kühlungseinrichtung mit einem Drucköl-Wärmetauscher schafft. Die Kühlungseinrichtung umfasst einen Drucköl-Wärmetauscher. Um Abrieb aus dem Drucköl-Wärmetauscher zurückzuhalten, ist vorteilhafter Weise ein Filter stromabwärts des Drucköl-Wärmetauschers in der Zirkulation angesiedelt. Weiterhin ist stromabwärts von der Kühlungseinrichtung eine Kupplungskühlstrecke vorhanden. Das Drucköl, das über den Wärmetauscher geführt ist, kann anschließend in die Kupplungskühlstrecke eingeleitet werden. Unter Verwendung von einem oder mehreren Ventilen lässt sich zudem die Druckölmenge oder der Anteil an dem Gesamtstrom des Drucköls über den Drucköl-Wärmetauscher einstellen. Zur Aufteilung des Drucköls sollte ein Abzweig in der Zirkulation angeordnet sein. Ein Teil des Drucköls kann so in die Kupplungskühlstrecke eingeleitet werden, ein Teil des Drucköls steht an anderen Stellen des Getriebes, z. B. für die Benetzung von Radsätzen, zur Verfügung. Die Kupplungskühlstrecke ist an einem der Abzweige der Zirkulation, die über den Drucköl-Wärmetauscher geführt ist, angeschlossen.

Mit der in den Ansprüchen beschriebenen Führung des Drucköls lässt sich gekühltes Drucköl in die Kupplungen einleiten. Der Temperaturunterschied zu den Kupplungen wird angehoben. Somit können in einer Ausgestaltung höhere Leistungen in dem Antriebsstrang durch die Kupplungen geführt werden. In einer weiteren Ausgestaltung lässt sich die Menge des Drucköls reduzieren. Je nach Auslegung des Drucköl-Wärmetauschers kann die Temperatur des Drucköls, das für die Kupplungskühlstrecke bestimmt ist, um mehr als 10 K abgesenkt werden. In einer Ausgestaltung, wird das Drucköl um wenigstens 10 K mittels Drucköl-Wärmetauscher gekühlt. Weil Drucköl nicht nur für die Kupplungskühlstrecke, sondern für weitere Verbraucher, Aktuatoren oder Stellen im Getriebe stromabwärts von der Abzweigung zur Verfügung gestellt wird, werden die angeschlossenen Verbraucher oder Aktuatoren mit dem kühleren Drucköl, das stromabwärts des Drucköl-Wärmetauschers vorhanden ist, betrieben. Das gekühlte Drucköl steht mehreren Ölkreisläufen zur Verfügung. Mit dem gekühlten Drucköl können die Kupplungen durchspült werden.

Die Kühlung des Drucköls hat den zusätzlich positiven Einfluss, die Lebensdauer der vorhandenen Dichtungen in dem Getriebe altern aufgrund der herabgesenkten Temperatur geringer.

Das Drucköl aus dem Drucköl-Wärmetauscher kann unter anderem durch das Muffenwahlventil oder durch die Muffenwahlventile geleitet werden. In einer besonders einfachen Ausgestaltung hat das Muffenwahlventil zwei Schaltstellungen. Das Muffenwahlventil soll die Flussrichtung des Drucköls für und von verschiedenen Schaltaktuatoren beeinflussen. Das Drucköl stammt ursprünglich aus der Druckölpumpe. Mit Hilfe der beiden Schaltstellungen wird sichergestellt, dass einer der beiden Schaltaktuatoren gesteuert werden kann, während der andere nicht angesprochen wird, sondern hydraulisch entlastet ist.

Das Muffenwahlventil lässt sich dahingehend beschreiben, dass es wenigstens zwei Schaltstellungen und wenigstens acht Ports aufweist. Die Ports sind die Stellen, an denen hydraulische Leitungen angeschlossen werden können. Die Ports dienen der Schaffung von hydraulischen Anschlüssen. Das Muffenwahlventil ist dafür bestimmt, in einem Getriebe für ein Kraftfahrzeug eingesetzt zu werden. Mit Hilfe des Muffenwahlventils findet die Ansteuerung des Aktuators statt, der die Schaltmuffe eines Getriebeteils in einem Doppelkupplungsgetriebe betätigen soll. Das Getriebe hat deswegen mehrere Schaltmuffen, weil das Schaltgetriebe, das mehrere Teilgetriebe aufweist, mit einer größeren Anzahl Gängen bzw. Radsätzen für unterschiedliche Gänge ausgebildet ist. Es sollten mehrere Kupplungen vorhanden sein. Das heißt, es sollte wenigstens eine erste Kupplung mit einem ersten Hydraulikzylinder und wenigstens eine zweite Kupplung mit einem zweiten Hydraulikzylinder vorhanden sein. Die Kupplungen bilden mit weiteren Bauteilen eine Doppelkupplungseinrichtung. Die Kupplungen arbeiten als Doppelkupplungseinrichtung. Mit der Doppelkupplungseinrichtung wird ein erstes Teilgetriebe und ein zweites Teilgetriebe des Schaltgetriebes beeinflusst. Die Doppelkupplungseinrichtung schaltet wechselweise die eine oder die andere Kupplung. Durch die Schaltstellung der Kupplungen, ob diese im Eingriff oder außer Eingriff sind, wird der Antriebsstrang in dem Doppelkupplungsgetriebe bestimmt. Die Doppelkupplungseinrichtung beeinflusst den Leistungsfluss und damit wählt sie den Antriebszweig des Getriebes aus.

Jedes Teilgetriebe weist Steuerungselemente auf. Die Steuerungselemente umfassen zweiseitig hydraulisch ansteuerbare Schaltaktuatoren. Das bedeutet, die Schaltaktuatoren haben eine erste Kammer und eine zweite Kammer. Die Kammern sind im Betrieb vorteilhafterweise gegenläufig ausgestaltet. Wächst die eine Kammer an, so verringert sich in einem proportionalen Maße die andere Kammer. Die Schaltaktuatoren können daher als zweiteilig bzw. zwei Hälften umfassend bezeichnet werden. Die Schaltaktuatoren setzen einen hydraulischen Druckunterschied in eine mechanische Bewegung um. Über die mechanische Bewegung eines Schaltfingers kann eine Schaltmuffe bewegt werden. Die Schaltaktuatoren besitzen ein Eingriffselement zu den Schaltaktuatoren. Die hydraulische Schaltung ist so realisiert, dass jeweils zwei Schaltaktuatoren einem Muffenwahlventil zugeordnet sind. Ein Muffenwahlventil steuert zwei Schaltaktuatoren.

Das Muffenwahlventil sollte wenigstens zwei Stellungen aufweisen. Das Muffenwahlventil ist ein Zwei-Stellungsventil. Es hat einen Schieberkolben. In einer Schaltstellung werden zwei Durchflusswege freigeschaltet. Die Durchflusswege führen von einem Druckanschluss des Muffenwahlventils zu zwei Arbeitsanschlüssen. Der oder die Ports, an denen der Arbeitsdruck des Drucköls bei bestimmten Schaltzuständen zur Verfügung gestellt wird, wird über das Muffenwahlventil wahlweise ausgewählten Ports weitergeleitet, an denen Arbeitskammern der Schaltaktuator anzuschließen sind.

Darüber hinaus sind weitere Ports vorgesehen. Das Muffenwahlventil weist drei Anschlüsse auf, die eine Schwimmstellung bilden können. In dem Ventil sind Bohrungen und Verbindungen eingearbeitet, damit eine Schwimmstellung realisiert werden kann. Die Schwimmstellung dient zur Herstellung einer Verbindung von Arbeitsanschlüssen des Muffenwahlventils zu einem Druckölsumpf. Wenn also eine Durchflussverbindung zu dem ersten Schaltaktuator gebildet wird, wird in der gleichen Schaltstellung bzw. zur gleichen Zeit eine Verbindung von dem anderen Schaltaktuator zu dem Sumpf des Getriebes hergestellt. Der eine Schaltaktuator kann ver- oder eingestellt werden, während der andere Schaltaktuator möglichst vollständig entlastet wird. Die Schwimmstellung stellt den Ablauf des Drucköls zu dem Sumpf aus einem der beiden Schaltaktuatoren sicher.

Das zuvor dargelegte Schaltungsprinzip und das entsprechende Muffenwahlventil können zur Herbeiführung eines Gangwechsels in einem erfindungsgemäßen Getriebe verschiedene Schaltzustände einnehmen. Wird ein Gangwechsel des Getriebes erwünscht, was gerne während eines anstehenden Lastzugs, also unter Last bzw. lastunterbrechungsfrei, bei Doppelkupplungsgetrieben ausgeführt wird, muss das ausgewählte Muffenwahlventil betätigt werden können. Im Übrigen werden die weiteren Ventile der Schaltungshydraulik in bestimmten Zuständen gehalten bzw. in bestimmte Schaltstellungen gebracht. Das Kraftfahrzeug soll seinen Vorschub unterbrechungsfrei fortsetzen. Soll ein Wechsel von einem Gang eines Teilgetriebes, der an einem Muffenwahlventil einstellbar ist, auf einen anderen Gang des Teilgetriebes, der durch ein zweites Muffenwahlventil einstellbar ist, durchgeführt werden, so ist es wichtig, dass das Muffenwahlventil, das den Gang auslegen soll, die Schaltmuffe in eine Neutralposition bringt. Hierzu findet eine gleichzeitige Entspannung von Hydraulikzuleitungen, die eine Verbindung zu einer ersten und einer zweiten Hälfte des zweiseitig hydraulisch ansteuerbaren Schaltaktuators bilden, sowohl untereinander als auch gegenüber einem Druckölsumpf statt. Durch eine innere Verbindung der Hydraulikzuleitungen in dem Muffenwahlventil bei Einnahme einer der Schaltstellungen wird die sichere Entlastung gefördert. Es ist vorteilhaft, wenn die Verbindung zur Druckversorgung der Schaltaktuatoren in einer Grundstellung verschlossen ist und die Anschlüsse nach Tank entlastet werden.

Vorteilhafte Weiterbildungen, die eigenständige erfinderische Ideen beinhalten können, werden zusätzlich erörtert.

Um bessere dynamische Eigenschaften des Getriebes zu erzielen, sind Gänge, und dementsprechend die Schaltmuffen, auf mehrere Teilgetriebe, z. B. wenigstens einem ersten Teilgetriebe und einem zweiten Teilgetriebe des Schaltgetriebes, aufgeteilt. Das Getriebe ist mit einer mehrere Kupplungen und Kupplungszylinder umfassenden Kupplungseinrichtung beeinflussbar.

Aus dem Druckölsumpf mittels einer Druckölpumpe wieder angesaugt, wird das Drucköl zur Druckbeaufschlagung von Hydraulikzylindern der Kupplungen und der Schaltmuffen des Schaltgetriebes bereitgestellt. Dabei arbeitet das als ein mehrere Schaltmuffen ausgebildetes Schaltgetriebe mit einer mehrere Kupplungen, wenigstens eine erste Kupplung mit einem ersten Hydraulikzylinder und wenigstens eine zweite Kupplung mit einem zweiten Hydraulikzylinder, umfassenden Doppelkupplungseinrichtung zusammen.

Zur Betätigung der Gangschaltung besitzt jedes Teilgetriebe Steuerungselemente. Z. B. besitzt jedes Teilgetriebe Steuerungselemente mit zweiseitig hydraulisch ansteuerbaren Schaltaktuatoren zum Bewegen der Schaltmuffen. Bei einer zweiseitigen Ansteuerung eines Aktuators kann eine an den Schaltaktuator angeschlossene Schaltmuffe aus einer Ausgangsposition zu einer Zielposition in einer Richtung und zurück bewegt werden. Dies hat den Vorteil, dass z. B. mit einem Schaltaktuator mehr als ein Gang ein- oder ausgeschaltet werden kann.

An ein Ventil, das einem Schaltaktuator ein Druckmittel zuführt, können mehrere Schaltaktuatoren angeschlossen sein. In einer vorteilhaften Ausgestaltung eines Getriebes sind jeweils zwei Schaltaktuatoren einem Muffenwahlventil zugeordnet. Ein Ventil, an welches zwei Schaltaktuatoren angeschlossen sind, kann z. B. zur Auswahl eines zu einem Zeitpunkt oder zu einer Vorgangsstufe zu betätigenden Schaltaktuators dienen. Wenn die Schaltaktuatoren zur Bewegung von Schaltmuffen bestimmt sind, ist das Ventil funktionsmäßig ein Muffenwahlventil.

In einer vorteilhaften Ausführung des Getriebes sind in einer ersten Stellung des Muffenwahlventils zwei Druckdurchflusswege, d. h. Durchflusswege von einem Druckanschluss des Ventils zu Arbeitsanschlüssen des Ventils für eine Beaufschlagung eines Schaltaktuators mit Drucköl einem ersten Schaltaktuator zugeordnet, dabei sind zwei Entspannungsdurchflusswege des Ventils, d. h. Wege zu einem Entspannungsanschluss mit Verbindung zu einem Druckölsumpf einem zweiten Schaltaktuator zugeordnet; und in einer zweiten Stellung des Muffenwahlventils ist die Zuordnung umgekehrt. Durch das Vorhalten von zwei Druckdurchflusswegen zu Arbeitsanschlüssen durch das Muffenwahlventil kann der eine, erste mit Drucköl zu beaufschlagende Schaltaktuator gleichmäßig mit dem Drucköl, dessen Druck durch einen Druckregler eingestellt ist, beaufschlagt werden. Unterdessen kann der zweite Schaltaktuator sich in dieser Stellung durch das Vorhalten von zwei Wegen mit Verbindung zu einem Druckölsumpf schnell entspannen. Des Weiteren kann der eine erste Schaltaktuator sich in einer zweiten Stellung entspannen, während der eine erste Schaltaktuator mit Drucköl beaufschlagt werden kann. Zur Entspannung des zu entlastenden Schaltaktuator werden zwei Kammern des Schaltaktuators über innere Wege des Muffenwahlventils mit dem Druckölsumpf verbunden.

Zur noch schnelleren Entspannung beziehungsweise zur besseren Entspannung der Kammern des Schaltaktuators bei erhöhter Viskosität des Öls, z. B. bei niedrigen Temperaturen, ist eine Bildung einer Schwimmstellung von wenigstens zwei Wegen des Muffenwahlventils vorgesehen. In einer vorteilhaften Ausführung des Getriebes wird die Schwimmstellung durch Herstellung einer inneren Verbindung zwischen zwei Wegen von zwei Arbeitsanschlüssen untereinander und zu wenigstens einem Entspannungsanschluss gebildet. Die Schwimmstellung lässt sich mechanisch in vielerlei Gestalt umsetzen. Durch Maßnahmen in oder an dem Muffenwahlventil wird eine Schwimmstellung realisiert. So können innere Verbindungen in dem Ventilkolben eingebaut sein. Alternativ oder zusätzlich können in der Hülse des Ventils eine Verbindung wie eine Verbindungsbohrung angesiedelt werden, damit das abströmende Hydraulikmittel zu der zentralen Sammelstelle gelangen kann. Vorteilhaft ist es, wenn die Schwimmstellung des Muffenwahlventils und die Freischaltung der beiden Durchflusswege in dem Muffenwahlventil in einer Schaltstellung des Muffenwahlventils, also insbesondere gleichzeitig, eingenommen werden. Vorzugsweise weist die eine Schwimmstellung bildende innere Verbindung zwischen den Entspannungsdurchflusswegen einen relativ großen Querschnitt und einen niedrigen hydraulischen Widerstand auf. In einer vorteilhafter Ausführung ist ein Verhältnis hydraulischer Widerstände der eine Schwimmstellung bildenden Verbindung und der Entspannungsanschlusse mit einem Wert kleiner als 1 anzusetzen. Um dieses Verhältnis zu erzielen, ist es vorteilhaft, wenn das Muffenwahlventil und seine Anschlüsse so gebildet sind, dass ein Verhältnis der kleinsten Querschnitte der eine Schwimmstellung bildenden Verbindung und der Entspannungsanschlüsse einen Wert größer als 1 erzeugen.

In einer bevorzugten Ausführung des Getriebes ist das Muffenwahlventil in Form eines Ventils mit zwei Schaltstellungen und einer Federrückstellung ausgebildet ist. Das Muffenwahlventil kann elektromagnetisch oder hydraulisch betätigt werden. Vorteilhaft ist es, wenn die Federrückstellung des Muffenwahlventils das Muffenwahlventil in einer Ruhestellung hält, d. h. in einer Stellung, die eingenommen wird, wenn mit abgeschalteter elektromagnetischer oder hydraulischer Betätigung gearbeitet wird.

Das Muffenwahlventil kann als einen Kolbenschieberventil realisiert sein, dass heißt, das Ventil hat einen Kolben, der mittels eines Elektromagneten oder mittels einer hydraulischen Druckbeaufschlagung aus einer ersten Schaltstellung, die einer Ruhestellung entspricht, in eine zweite Schaltstellung übergeführt wird. In einer bevorzugten Ausführung wird dabei die Feder der Federrückstellung, die den Kolben in einer Ruhestellung hält, gespannt. Wenn der Strom des Elektromagneten abgeschaltet, oder die Druckbeaufschlagung des Kolbens beendet ist, kehrt der Kolben unter Einwirkung der Federrückstellung in die Ruhestellung zurück.

In jeder Stellung, dazu gehört auch eine Ruhestellung, hat das Muffenwahlventil zwei für einen Drucköldurchfluss gesperrte Wege. Vorteilhaft ist es, wenn die für den Drucköldurchfluss gesperrten Wege in der Ruhestellung der unterschiedlichen Muffenwahlventile den Schaltaktuatoren unterschiedlicher Teilgetriebe zugeordnet sind. Über eine zentrale Wegeventilvorrichtung kann mit jeweils einem Druckventil jeweils ein Schaltkolben in zwei diametrale Richtungen druckbeaufschlagt werden, um wahlweise zwei Gangstufen je Schaltkolben mittels der zugehörigen Schaltschienen zu schalten. Insgesamt ergibt sich durch die Kombination von Strömungsventilen und Druckventilen zusammen mit der Wegeventilvorrichtung durch eine relativ geringe Anzahl von Ventilen eine kostensparende Ausbildung des Hydraulikkreises für das Doppelkupplungsgetriebe

Dem Muffenwahlventil ist ein Wegeventil mit einer Sperrstellung, einer Durchflussstellung und einer Wegeumkehrung in Form eines Gangschaltventils vorgeschaltet. Insbesondere kann das Gangschaltventil in Form eines elektromagnetisch gesteuerten Ventils mit Federrückstellung ausgebildet sein. Durch die Wegeumkehrung kann ein zu betätigender Schaltaktuator und dementsprechend eine zu bewegende Schaltmuffe - je nach Stellung des Ventils - in einer Richtung und in einer Gegenrichtung hierzu bewegt werden. Durch die Federrückstellung wird das Ventil nach Abschalten des Elektromagneten immer in eine durch den Aufbau des Ventils definierte Stellung geschaltet.

Das Gangschaltventil kann eine Schwimmstellung und eine Stellung mit einer Wegeumkehrung aufweisen. In der Schwimmstellung sind die gesperrten Wege untereinander verbunden. In dieser Stellung kann ein zu entlastender Schaltaktuator sich entspannen. Vorteilhaft ist es, wenn die Schwimmstellung des Gangschaltventils als eine Stellung mit Verbindung der gesperrten Wege zu dem Druckölsumpf ausgebildet ist. Dadurch kann die Druckbeaufschlagung des nachgeschalteten Muffenwahlventils bzw. einer Schaltmuffe bei einer Umschaltung des Gangschaltventils mit Wegeumkehrung über die Sperrstellung schneller durchgeführt werden. Durch die Wegeumkehrung kann die eine Seite oder die andere Seite des Schaltzylinders mit Drucköl beaufschlagt werden.

Vorteilhaft ist, wenn die Federrückstellung des Gangschaltventils mit einer Ruhestellung des Gangschaltventils zusammenfällt. Durch die Federrückstellung wird das Ventil nach Abschalten des Elektromagneten immer in eine Ausgangsstellung geschaltet.

Um die Schaltmuffen möglichst genau in eine bei der Gangschaltung ausgewählte Position zu platzieren, ist dem Gangschaltventil ein Druckregler vorgeschaltet. Insbesondere kann der Druckregler als ein elektrohydraulisches Proportional-Wegeventil ausgeführt sein. Dies trägt zur Genauigkeit und Einfachheit der Ansteuerung der Schaltzylinder und der Schaltmuffen. Proportionalventile haben den Vorteil, dass mit ihnen eine Einstellung der Schaltwege mit stetigem Übergang möglich ist. Über die proportionalen Druckventile können die Ansprechdrücke für die Schaltzylinder vorgegeben werden. Die Druckkräfte können dabei so eingestellt werden, dass ein Gangeinlegen möglichst schonend für die Synchronringe der Schaltvorrichtung erfolgt.

Vorteilhaft ist es, wenn das Muffenwahlventil hydraulisch durch ein elektromagnetisch betätigtes Vorsteuerventil betätigbar ist, sofern schnelle Schaltvorgänge erwünscht sind. In diesem Fall kann eine Konstruktion des Muffenwahlventils einfacher sein, wobei ein kleineres Vorsteuerventil relativ große Leistung des Muffenwahlventils steuern kann. Insbesondere kann ein einfaches Umschaltventil als Vorsteuerventil verwendet werden.

Zur Kontrolle der Positionierung der Schaltmuffen sind den Schaltaktuatoren Positionierungssensoren zugeordnet. Die Schaltaktuatoren können als Gleichgangzylinder ausgebildet sein. In diesem Fall ist die Kontrolle vorteilhaft vereinfacht. Die Positionierungssensoren liefern Information über die momentane Lage der Schaltmuffen, die im Normalbetrieb durch Ansteuerung des Proportional-Wegeventils bedingt ist. In einem Notfall, z. B. bei einem Ausfall eines Ventils, kann das Getriebe aufgrund der Information in einem Notbetriebmodus gesteuert werden.

Vorteilhaft ist es, wenn mindestens einem Muffenwahlventil Schaltaktuatoren unterschiedlicher Gänge eines Teilgetriebes zugeordnet sind. In einen solchen Fall kann in einem Notbetriebmodus zwischen Gängen unterschiedlicher Teilgetriebe umgeschaltet werden.

Dem Hydraulikzylinder ist vorteilhafter Weise ein Kupplungsdruckregler vorgeschaltet, wobei der Kupplungsdruckregler vorzugsweise in Form eines elektrohydraulischen Proportional-Wegeventils mit Federrückstellung ausgeführt ist. Die proportionalen Stromventile regeln über ihre Drosselwirkung die Bewegungsgeschwindigkeit des Strömungsmittels innerhalb des Hydraulikkreises. Dies ermöglicht ein exaktes Anfahren des Kisspoints der Kupplung(en). Dies wirkt sich günstig auf den Schaltkomfort und den Kupplungsverschleiß aus.

Der Kupplungsdruckregler kann nach Art eines elektrohydraulischen Schieberventils mit einem Elektromagneten und einem einseitig elektromagnetisch betätigten Ventilkolben und Federrückstellung ausgeführt sein. Vorzugsweise weist der Kupplungsdruckregler eine Rückkoppelung mit einer Rückkoppelungsleitung auf, die einen in einer Druckölzuleitung zum Hydraulikzylinder jeweils wirkenden Druck in Form eines Referenzdrucks durch die Rückkoppelungsleitung dem Kupplungsdruckregler zuführt. Der Kupplungsdruckregler weist eine Referenzdruckfläche auf, die einer Wirkung des Referenzdrucks ausgesetzt ist. Durch diese Wirkung kann der Kupplungsdruckregler steuerbar sein. Vorzugsweise ist die Referenzdruckfläche dem Ventilkolben des Schieberventils zugeordnet.

Der Kupplungsdruckregler lässt unter Einfluss einer aus der Höhe des Referenzdrucks und der Größe der Referenzdruckfläche ergebenden Referenzkraft steuern, insbesondere dadurch, dass die Referenzkraft gegen die Magnetkraft des Elektromagneten des Kupplungsdruckreglers gerichtet ist. Daraus ergibt sich eine auf dem Gleichgewichtprinzip basierte Möglichkeit zur Steuerung.

In einer bevorzugten Ausführung ist zwischen dem Kupplungsdruckregler und dem Hydraulikzylinder eine Schalteinrichtung vorgesehen. Die Schalteinrichtung verbessert hydraulisches Verhalten des Getriebes, indem die Vorgänge der Kupplungstrennung und Kupplungsschließung beschleunigt werden. Vorzugsweise ist die Schalteinrichtung in Form eines Ventils mit zwei Schaltstellungen und einer Federrückstellung umgesetzt, die nach Art eines Schaltventils ausgebildet ist und als Kupplungstrennventil arbeitet. Insbesondere ist ein hydraulisches Verhalten vorteilhaft, durch das eine Kupplungstrennung innerhalb von weniger als 0,5 Sekunden stattfinden kann. In einer vorteilhaften Ausführung kann ein hydraulischer Speicher, der vorzugsweise als drosselangebunden ausgebildet ist, zwischen Kupplungsdruckregler und Schalteinrichtung ein Hydraulikmittel als Ausgleichmenge für die Betätigung aufnehmen und abgeben.

Zur Kontrolle des Hydraulikzylinders der Kupplung ist je ein Positionierungssensor vorgesehen. Der Positionierungssensor kann z. B. als Drucksensor mit einer Messaufnahme in einer der Druckölzuleitungen ausgebildet sein. Eine Verschiebung des Hydraulikzylinders hängt mit dem Druck in der Zuleitung linear zusammen.

Das Getriebe sollte eine Steuerungseinheit, ein Steuergerät, zur Erfassung und Bearbeitung von Signalen der Positionierungssensoren der Schaltaktuatoren der Schaltmuffen und der Positionierungssensoren der Hydraulikzylinder der Kupplungen haben. Die Steuerungseinheit sollte z. B. Vorgänge in dem Getriebe steuern, die Synchronisation der Vorgänge in Teilgetrieben, die Steuerung der Ventile, die Überwachung und Steuerung des Betriebsmodus und die Einleitung eines Notbetriebsmodus durchführen können. Die Steuerungseinheit kann Positionen der Schaltmuffen und Schaltzustände des Muffenwahlventils messen, erheben und ermitteln, damit so eine Überwachung durchführen.

Die Schwimmstellung des Muffenwahlventils und die Freischaltung der beiden Durchflusswege in dem Muffenwahlventil in einer Schaltstellung des Muffenwahlventils werden, abhängig von einer Ausführung des Ventils, schnell nacheinander, also innerhalb einer durch dynamisches Verhalten des Muffenwahlventils definiert kurzen Zeitspanne, oder insbesondere gleichzeitig eingenommen. Gleichzeitig soll Druckölbeaufschlagung von zwei Schaltaktuatoren geändert werden. Dabei sollen zwei unabhängig voneinander bewegliche Schaltmuffen in Bewegung gebracht werden, um ein Gangschaltvorgang einzuleiten. Ist-Zustand der mit den Schaltmuffen abgelegten Strecken und deren Richtungen bei dieser Bewegung sind in der Steuerungseinheit zu erfassen und mit einem Soll-Zustand zu vergleichen. Dabei kann durch die Steuerungseinheit eine Entscheidung getroffen bzw. eine Maßnahme eingeleitet werden, z. B. Öffnen oder Schließen einer Kupplung.

In dem Getriebe ist eine Anzahl von Ventilen für verschiedene Steuerungsaufgaben vorhanden. Zur Steuerung eines Schmierölflusses ein Schmierölstromventil vorgesehen, das vorzugsweise in Form eines hydraulisch betätigten Ventils mit einer Sperrstellung und einer Durchflussstellung ausgebildet ist. Zur Steuerung eines Kühlölflusses zu wenigstens einer der Kupplungen ist ein Kühlölstromventil vorgesehen. Das Ventil kann in Form eines hydraulisch oder elektromagnetisch betätigten Ventils realisiert sein. Das Ventil sollte eine Sperrstellung und eine Durchflussstellung haben. Das Ventil sollte zumindest als Zweistellungs-Ventil ausgebildet sein. Weitere Stellungen fördern die Funktionsvielfalt. Ist das Ventil ein Proportional-Regelventil, so kann der Kühlölstromfluss eingestellt werden. Ist das Ventil ein elektromagnetisch einstellbares Ventil, so kann die Menge des Kühlöls mit Hilfe des elektrischen Stroms in den Magneten oder durch das Tastverhältnis bei der Magnetansteuerung eingestellt werden. Das Ventil lässt sich in der Kupplungskühlstrecke angeordnet sein. Das Ventil lässt sich am Eingang der Kupplungskühlstrecke anordnen, so kann das Kühlölstromventil die Kühlölstromstrecke und die zu kühlenden Kupplungen oder die zu kühlende Kupplung bedarfsgerecht kühlen.

Weil eine beachtliche Leistung, z. B. die Verlustleistung, die bei einem Drehmoment von mehr als 400 Nm in der Kupplung in Wärme umzusetzen ist, über einige Doppelkupplungen zu führen ist, sollte eine ausreichende Kühlung auch in dem Fall, dass das Kühlölstromventil einen Fehler aufweisen sollte, gegeben sein. Hier hilft ein federvorgespanntes Proportional-Regelventil, das als Kühlölstromventil in der Durchflussstellung solange gehalten wird, wie eine Steuerkraft zur Einnahme der Sperrstellung durch einen Kolben des Kühlölstromventils geringer als eine Leerlauffederkraft ist. Die Kraft der Feder, die die Federvorspannung erzeugt, ist so groß, dass der Kolben des Ventils in der Durchlassstellung gehalten werden kann. Nur wenn eine ausreichende elektrische Bestromung stattgefunden hat, schaltet das Ventil in die Sperrstellung.

Sollte in dem Getriebe ein Kühlölstromventil eingebaut sein, das hydraulisch betätigt wird, so kann zur hydraulischen Betätigung des Kühlölstromventils ein Kühlölführungsventil vorgesehen sein. Das Kühlölführungsventil übernimmt die Aufgabe eines Pilotventils für das Kühlölstromventil. Das Kühlölführungsventil arbeitet besonders zuverlässig, wenn das Kühlölführungsventil als rückgekoppeltes, elektrohydraulisches Proportional-Druckregelventil ausgebildet ist.

In dem Ölkreislauf, der unter anderem für die Druckölkühlung zuständig ist, er kann auch als Druckölaufbereitungskreislauf bezeichnet werden, können noch weitere Ventile vorhanden sein. Ein die Funktionssicherheit förderndes Ventil ist ein Hauptdruckregler. Der Hauptdruckregler dient zur Regulierung des gesamten Druckölflusses in dem Getriebe. Der Hauptdruckregler ist bestimmt durch den Druck, mit dem u. a. auf eine Kolbenseite des Druckölumlaufventils eingewirkt wird. Der Hauptdruckregler ist als vor dem Druckölumlaufventil vorgeschaltetes Ventil vorgesehen. Der Hauptdruckregler kann in einer Ausgestaltung in Form eines rückgekoppelten elektrohydraulischen Ventils ausgebildet sein. Der Hauptdruckregler sollte ein Proportional-Regelventil sein. Das Proportional-Regelventil des Hauptdruckreglers sollte wenigstens zwei Stellungen haben. An den Hauptdruckregler ist ein Anschluss zur Bestimmung einer Stellung eines weiteren Ventils genutzt. Das weitere Ventil ist in dem zuvor gebildeten Beispiel das Druckölumlaufventil, das an dem Hauptdruckregler stromabwärts für die Einstellung seines Kolbens angebunden ist. Über den Hauptdruckregler kann die Schaltstellung des Druckölumlaufventils eingestellt werden, dass ebenfalls ein Proportional-Regelventil sein kann.

Das Druckölumlaufventil hat verschiedene Stellungen. Das Druckölumlaufventil dient unter anderem zur Stabilisierung des gesamten Druckölflusses in dem Getriebe. Das Druckölumlaufventil sollte wenigstens ein Drei-Stellungsventil sein. Das Druckölumlaufventil sollte eine erste Stellung haben, in der eine Zuleitung zu dem Drucköl-Wärmetauscher unterbrochen ist. Das Druckölumlaufventil sollte eine zweite Stellung haben, in der das unter Druck stehende Drucköl zu dem Drucköl-Wärmetauscher gelangt. Das Druckölumlaufventil sollte eine dritte Stellung haben, in der ein Teil des geförderten Drucköls zu einer Ansaugseite der Öldruckpumpe gelangen kann. In der dritten Stellung sollte ein weiterer Ölpfad geöffnet werden. Während ein Teil des von der Öldruckpumpe geförderten Drucköls wieder zur Ansaugleitung der Öldruckpumpe gelangt, wird für einen weiteren Teil des Drucköls eine Verbindung von der Öldruckpumpe zu dem Drucköl-Wärmetauscher hergestellt. In einer solchen Gestaltung sollte das Druckölumlaufventil in Form eines hydraulisch durch den Hauptdruckregler und eine Pumpenableitung betätigten Ventils ausgebildet sein. Das Druckölumlaufventil ist zweiseitig hydraulisch eingespannt. Das Druckölumlaufventil lässt mit Hilfe eines Druckunterschieds auf zwei Seiten des Kolbens des Druckölumlaufventils einstellen. Eine Seite des Druckölumlaufventils ist an den Hauptdruckregler angeschlossen. Eine Seite ist an die Pumpenableitung angebunden. Die Pumpenableitung ist die Leitung, in die das unter Druck stehende Drucköl, von der Öldruckpumpe unter Druck gesetzt, an weitere Verbraucher weitergeleitet wird.

In dem Getriebe sollte ein Ventil vorhanden sein, das die Aufgabe eines Schmierölstromventils übernehmen kann. Das Schmierölstromventil und das Kühlölstromventil sind strömungsmäßig dem Drucköl-Umlaufventil nachgeschaltet. Das Drucköl, das durch das Druckölumlaufventil von der Öldruckpumpe weitergeleitet wird, strömt durch das Schmierölstromventil und das Kühlölstromventil, sofern die beiden Ventile Schmierölstromventil und Kühlölstromventil in Durchlassstellung geschaltet sind.

Das Getriebe hat in einem hydraulischen Pfad das Schmierölstromventil, das Kühlölstromventil und das Druckölumlaufventil. Das Druckölumlaufventil bestimmt, welcher Anteil des Drucköls von der Druckölpumpe in den Kühlkreislauf geleitet wird. Das Druckölumlaufventil bestimmt, ob das gesamte Öl durch die Kühlungseinrichtung, die den Drucköl-Wärmetauscher umfasst, geleitet wird. Die Zirkulation, in der die Kühlungseinrichtung angeordnet ist, kann mit Hilfe des Druckölumlaufventils in einer Stellung von der Druckölpumpe abgeschlossen werden. Der Fluss des Drucköls ist in einer Stellung abgeschnitten von der Druckölpumpe. In diesem Fall steht das Drucköl für die übrigen Aktuatoren vollständig zur Verfügung. In Fällen, in denen entweder das Drucköl nicht gekühlt werden muss, z. B. bei tiefen Betriebstemperaturen, oder bei denen ein Fehlerfall in der Druckölversorgung der Hydraulik der Doppelkupplungseinrichtung gegeben ist, z. B. bei einem verstopften Filter, wird ein Notbetrieb der Aktuatoren wie den Schaltaktuatoren und den Hydraulikzylindern sichergestellt.

In dem Getriebe ist in vorteilhafter Weise zudem ein Kühlölumlaufventil vorhanden. Das Kühlölumlaufventil hat eine Sperrstellung und eine geöffnete Stellung. Zur Umleitung des Kühlölflusses zu einer Ansaugseite der Öldruckpumpe wird bei einem vorhandenen Druckunterschied über das Kühlölstromventil das Kühlölumlaufventil geschaltet. Hierbei sollte das Kühlölumlaufventil in Form eines hydraulisch betätigten Ventils mit einer Sperrstellung und einer Durchflussstellung ausgebildet sein. Ein hydraulisch betätigtes Kühlölumlaufventil kann durch Vergleich eines Öldrucks eingestellt werden. Der Öldruck an einer Zustromseite zu dem Kühlölumlaufventil und der Öldruck in der Kupplungskühlstrecke beeinflusst eine Ventilstellung des Kühlölumlaufventils.

Das zuvor beschriebene Getriebe kann mittels einer Ölflusssteuerung mit unterschiedlich stark gekühltem Drucköl betrieben werden. Durch die Stellungswahl verschiedener Ventile lässt sich nicht nur der Ölfluss einstellen, auch das Schaltverhalten durch die Muffenwahlventile entspricht Sicherheitsanforderungen. Das Schalten erfolgt so, dass unerwünschte doppelte Gangeinlegungen durch die Ölverteilung der Hydraulik bzw. die eingestellten und sich selbst einstellenden Druckölpfade der Hydraulik möglichst gut vermieden werden können. Hierbei werden mittels einer Ölflusssteuerung die Hydraulikzuleitungen zu einem Schaltaktuator aufgeschlossen. Unter Nutzung des Muffenwahlventils kann ein extrem synchroner Vorgang ablaufen. Eine gleichzeitige Aufschließung von Hydraulikzuleitungen zu den Hälften eines zweiseitig hydraulisch ansteuerbaren Schaltaktuators erfolgt, während eine Entlastung eines zweiten Schaltaktuators erfolgt. Beide Schaltaktuatoren gehören dem gleichen Teilgetriebe an. Die Entlastung erfolgt gegenüber einem Gangschaltventil. Das Gangschaltventil ist dem Muffenwahlventil vorgeschaltet.

Das Kühlölumlaufventil bildet mit dem Kühlölstromventil eine sich gegenseitig beeinflussende Ventileinheit, durch die zum Beispiel im Fall eines Staudrucks in der Leitung der Kupplungskühlstrecke der Staudruck in Richtung auf die Rückleitung zur Öldruckpumpe abgebaut werden kann. Der Staudruck kann vielerlei Ursachen haben, z. B. aufgrund thermischer Gegebenheiten entweder des Öls (zu hohe Viskosität) oder von Verschmutzungen eines Filters (zu geringer Durchfluss) entstehen. Bei einem zu hohen Staudruck, z. B. wenn noch nicht die Betriebstemperatur erreicht worden ist, wird die Kupplungskühlstrecke abgekoppelt.

Erst wenn die Schaltaktuatoren ausreichend mit Drucköl versorgt sind, wird die Beölung der Radsätze und der Lager aufgenommen. Das Schmierölstromventil wird durch das Druckölumlaufventil versorgt. Der Hauptdruckregler verstellt das Druckölumlaufventil und gibt über den eingestellten Druck im Vergleich zu dem durch die Öldruckpumpe erzeugten Druck die an das Druckölumlaufventil angeschlossenen Ölkreisläufe bzw. Zirkulationen und Verbraucher frei. Durch einen Puffer oder Speicher können von der Öldruckpumpe verursachte kurzzeitige Schwankungen, wie z. B. Pulse, ausgeregelt werden. Je nach Größe der eingesetzten Speicher dient ein solcher Speicher zur Vermeidung von Schwingungen bei der Ansteuerung. Das Hydraulikmittel wird von der Druckversorgung für die Betätigung der Schaltaktuatoren zur Verfügung gestellt.

Das dem jeweiligen Hydraulikzylindern vorgeschaltete Proportional-Regelventil wird als Druckregelventil verwendet. Die Ölleitung zu dem jeweiligen Hydraulikzylinder ist ausreichend mit Öl versorgt. Wird ein Hydraulikzylinder verstellt, so stellt in einer Ausgestaltung der stichleitungsartig vorhandene Speicher stromabwärts des Proportional-Regelventils die von dem Hydraulikzylinder benötigte Ölmenge zur Verfügung. Wird der Speicher etwas kleiner dimensioniert, so dient der Speicher zur Schwingungsdämpfung.

Das Muffenwahlventil arbeitet in einer besonders einfachen Ausgestaltung als Zweistellungsventil, bei dem in jeder Schaltstellung ein Schaltaktuator komplett in eine entlastete Stellung, z. B. in eine Schwimmstellung, gebracht werden kann. Hierbei reicht es aufgrund einer besonders vorteilhaften Kanalführung, wenn eines der vorhandenen Muffenwahlventile eine Schaltstellung zur Gänze eingenommen hat. In einer solchen Schaltstellung sind zwei, vorzugsweise gegensätzlich arbeitende, Kammern eines Schaltaktuators, also die eine Hälfte und die andere Hälfte eines Schaltaktuators, zu einem Druckölsumpf durchgeschaltet. Das Durchschalten erfolgt durch ein einziges Muffenwahlventil. In der gleichen Schaltstellung bleibt aber ein anderer Schaltaktuator betriebsbereit. In der gleichen Schaltstellung wird wenigstens eine Kammer des anderen Schaltaktuators mit einem Drucköl versorgt. Ein Muffenwahlventil reicht aus, um zwei Schaltaktuatoren simultan anzusteuern. In dieser Ansteuerung durch ein Muffenwahlventil sorgt das Muffenwahlventil dafür, dass die Kammern eines Schaltaktuators eine Entleerung durch Abfluss des Hydraulikmittels gegenüber dem Druckölsumpf erfahren. Das zum Druckölsumpf abgeleitete Hydraulikmittel Öl wird nur über ein einziges Ventil geführt, um in die Rückleitung zu dem Druckölsumpf zu gelangen. Ein Vorsteuerventil muss nicht mehr durchflossen werden. Das Muffenwahlventil entlastet von sich aus in vorteilhafter Weise immer den Schaltaktuator, der - bei der jeweiligen Gangwahl eines Gangs des anderen Schaltaktuators - nicht benötigt wird. Ein Verhaken aufgrund unkontrollierbarer Druckverhältnisse wird ausgeschlossen. Der Schaltaktuator betätigt eine Muffe. Die Muffe bewegt sich ohne einseitige Kraft auf den Schieber in eine Neutralstellung bzw. in eine Zwischenstellung zwischen den Synchronisationsstellungen.

Das Muffenwahlventil lässt sich in einer besonders einfachen Ausgestaltung als 8/2-Ventil realisieren, von denen zwei Ports als Arbeitsports verschaltet sind, während zwei andere Ports zum Tank bzw. zum Druckölsumpf freigeschaltet sind. Je nach Schaltstellung werden die Belegungen jeweils genau umgekehrt. Das 8/2-Ventil kann als magnetbetätigtes Ventil realisiert sein.

Durch das gesonderte Druckregelventil kann die zentrale Druckversorgungsleitung von dem einzelnen Muffenwahlventil bzw. von einem einzelnen Strang abgesperrt werden. Somit erfolgt eine Entkopplung eines Muffenwahlventils von den restlichen Aktuatoren. In einem Strang müssen nur noch die Schaltaktuatoren für die Wahl von Gängen eines Teilgetriebes vorhanden sein.

Das erfindungsgemäße Getriebe zeichnet sich durch die Ventilkonstruktionen, ein vorteilhaftes hydraulisches Schema und ein Verfahren zur Steuerung aus, bei der das Funktionieren des Getriebes, insbesondere eine betriebsgerechte Druckmittelbeeinflussung, Schmierung, Kühlung und Gangschaltung auch in zahlreichen Notbetriebssituationen, gewährleistet ist. Selbst in einem erweiterten Temperaturbereich bleibt die hydraulische Steuerung des Getriebes notbetriebsfähig. Eine zuverlässige Funktion wird selbst in einem großen Temperaturbereich sichergestellt. Im Fall eines Komponentenausfalls bleiben die übrigen Teile des Getriebes betriebsbereit.

### Figurenkurzbeschreibung

Die vorliegende Erfindung kann noch besser verstanden werden, wenn Bezug auf die beiliegenden Figuren genommen wird, die eigenständige erfinderische Aspekte zusätzlich offenbaren können, wobei
- Figur 1: einen vereinfachten Übersichtsplan einer erfindungsgemäßen Hydraulik zeigt,
- Figur 2: schematisch eine zweite Ausführungsvariante eines erfindungsgemäßen Hydraulikplans zeigt,
- Figur 3: eine Ventilgruppe mit Schaltaktuatoren ähnlich der in den Figuren 1 und 2 gezeigten Baugruppen 200, 200' zeigt,
- Figur 4: eine alternative Ausführungsform von hydraulischen Muffenansteuerungen ähnlich zu Figur 3 zeigt,
- Figur 5: die Hydraulikschaltung für die Schaltaktuatoren in vereinfachter Darstellung, als Ausschnitt aus Figur 1, zeigt,
- Figur 6: ausschnittsweise den Hydraulikteil der Schaltaktuatoren nach Figur 2 vergrößert darstellt,
- Figur 7: die Kupplungsaktuatoren und die dazugehörige hydraulische Ansteuerung, also die hydraulische Ansteuerung der Hydraulikzylinder, zeigt,
- Figur 8: eine erste Druckölaufbereitungsschaltung zeigt,
- Figur 9: eine zweite Druckölaufbereitungsschaltung zeigt und
- Figur 10: ein Doppelkupplungsgetriebe in Prinzipdarstellung in einem Kraftfahrzeug zeigt.

### Figurenbeschreibung

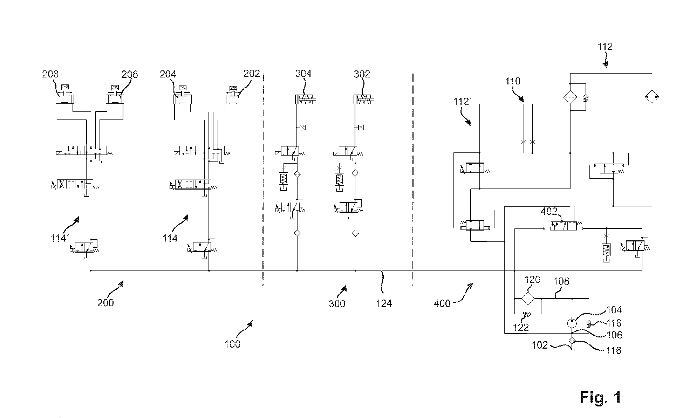

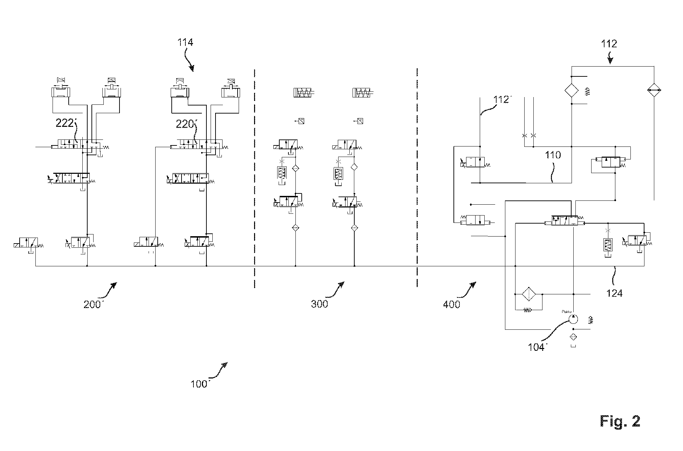

Ein Gesamteindruck von wesentlichen Teilen einer Doppelkupplungshydraulik vermitteln die Figuren 1 und 2. Figur 2 stellt eine ähnliche Hydrauliksteuerung 100' dar, wie sie in Figur 1 als Hydrauliksteuerung 100 nachfolgend erörtert werden soll.

Die Hydrauliksteuerung 100 setzt sich aus mehreren hydraulischen Baugruppen zusammen. Eine Baugruppe ist die Gangsteuerung 200. Eine Baugruppe ist die Kupplungssteuerung 300. Eine Baugruppe ist die Hydraulikmittelaufbereitung 400. Jede Baugruppe hat einen ihr zugeordneten Hydraulikkreis bzw. eine Zirkulation. Ein Getriebe mit einer Hydrauliksteuerung nach Figur 1 weist ein Reservoir für das Hydraulikmittel, für das Hydrauliköl, auf, das der Einfachheit halber als Druckölsumpf 102 bezeichnet werden kann. Die Öldruckpumpe 104, die z. B. eine Kolbenpumpe sein kann, baut auf der Ansaugseite 106 einen Unterdruck auf, sodass aus dem Druckölsumpf 102 gefiltertes Öl in die Öldruckpumpe 104 gelangen kann. Für die Ölfilterung ist ein Druckölfilter 116 anströmseitig der Pumpe vorgeschaltet, der die Funktion eines Ansaugfilters wahrnehmen kann. Aus Sicherheitserwägungen wird parallel zur Öldruckpumpe 104 ein Überdrucksicherheitsventil 118 in Sperrrichtung eingebaut. Das bedeutet, das Überdrucksicherheitsventil 118 reißt auf, wenn die Öldruckpumpe 104 einen die Federvorspannung des Rückschlagventils des Überdrucksicherheitsventils 118 übersteigenden Druck aufbauen sollte. Solange das Überdrucksicherheitsventil 118 nicht angesprochen hat, d. h. nicht geöffnet hat, was der Regelfall ist, wird die Pumpenableitung 108 mit Drucköl befüllt. Am Anfang eines Betriebes sollte Druckölumlaufventil 402 in einer Sperrstellung sein, sodass das gesamte Öl der Öldruckpumpe 104 in der Pumpenableitung 108 über den Druckölfilter 120 in die Zentralversorgungsleitung 124 gefördert wird, damit die vorrangigen Baugruppen, wie die Gangsteuerung 200 oder die Kupplungssteuerung 300, ausreichend mit Öl versorgt werden können. Durch diese Maßnahme wird sichergestellt, dass die Gangsteuerung 200 mit ihren Ölkreisläufen 114, 114' die Schaltaktuatoren 202, 204, 206, 208 bedienen kann. Somit ist ab dem Zeitpunkt, ab dem die Druckölpumpe 104 ausreichend fördert, ein beliebiger Gang über die Schaltaktuatoren 202, 204, 206, 208 ein- und auslegbar. Steht ausreichend Drucköl in der Zentralversorgungsleitung 124 zur Verfügung, können die Hydraulikzylinder 302, 304 der Kupplungssteuerung 300 ebenfalls betätigt werden. Erst wenn die Baugruppen Kupplungssteuerung 300 und Gangsteuerung 200 betriebsbereit sind, wird das Druckölumlaufventil 402 verstellt. Als weitere Sicherheitsmaßnahme ist ein Bypass 122 verbaut. Der Bypass 122 ist parallel zu dem Druckölfilter 120 angeordnet. Wird das Druckölumlaufventil 402 verstellt, d. h. eine Durchlassrichtung eingestellt, so gelangt Drucköl in den Ölkreislauf 112, der sich in dem Ölkreislauf 112' fortsetzt, und in den Ölkreislauf 110. Der Ölkreislauf 112 ist der Kreislauf für die Kühlung des Drucköls. Über den Kreislauf 112' können die Kupplungen mit herabgekühltem Öl versorgt werden. Der Ölkreislauf 110 umfasst die Ölleitungen für die Beölung der Radsätze und von zu beölenden Lagern. Das Öl des Ölkreislaufes 110 wird zurück in den Druckölsumpf 102 geführt.

Eine Hydrauliksteuerung 100' nach Figur 2 arbeitet prinzipiell ähnlich wie die Hydrauliksteuerung 100 der Figur 1. Das Hydraulikmittel wird in der Hydraulikmittelaufbereitung 400 unter den Betriebsdruck gesetzt, ggf. gekühlt und an zu beölende Stellen weitergeleitet. Der Ölbedarf der Bauteilgruppe, die für die Gansteuerung zuständig ist, ist geringfügig höher, weil die Gangsteuerung 200' hydraulisch betätigte Muffenwahlventile 220', 222' hat. Die hydraulisch betätigten Muffenwahlventile 220', 222' werden gerne genommen, wenn ggf. schneller bzw. mit höheren Kräften geschaltet werden soll, als es bei ihren elektrischen Pendants möglich ist. Wird die Öldruckpumpe 104', z. B. eine Flügelzellenpumpe, ausreichend dimensioniert, so kann die Aufladung der Zentralversorgungsleitung 124 und die daran angeschlossenen Baugruppen Gangsteuerung 200' und Kupplungssteuerung 300 genauso schnell in einen startbereiten Zustand versetzt werden, wie eine Hydrauliksteuerung 100 nach Figur 1 nahezu von Anfang an des verbrennungsmotorischen Betriebs betriebsbereit ist. Durch die richtige Einstellung verschiedener Ventile wird ein Teil des durch die Öldruckpumpe 104' geförderten Öls durch den Ölkreislauf 112 ab einem frühen Zeitpunkt nach der Befüllung der Zentralversorgungsleitung 124 geführt, sofern Bedarf nach ausreichend gekühltem Öl in den weiteren Ölkreisläufen 110, 112' und 114 erforderlich sein sollte.

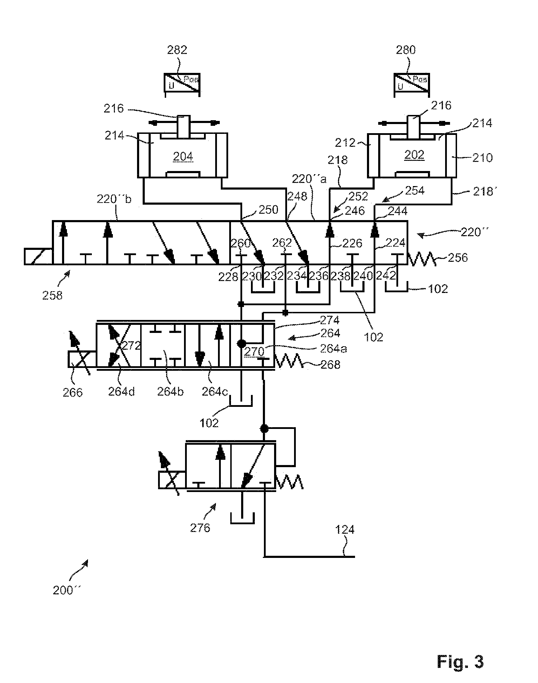

Figur 3 zeigt ein weiteres Ausführungsbeispiel einer Gangsteuerung 200". Die Gangsteuerung 200" hat zwei Schaltaktuatoren 202, 204. Die Gangsteuerung 200" hat ein Muffenwahlventil 220". Das Muffenwahlventil 220" ist ein Zwei-Stellungs-Ventil. Das Muffenwahlventil 220" hat die Ports 228, 230, 232, 234, 236, 238, 240, 242, 244, 246, 248 und 250. Das Muffenwahlventil 220" weist 12 Ports auf. Das Muffenwahlventil 220" ist ähnlich wie die Muffenwahlventile 220, 220' wenigstens ein Zwei-Stellungs-Ventil. Das Muffenwahlventil 220" hat eine erste Schaltstellung 220"a und eine zweite Schaltstellung 220"b. Diese beiden Ventilsitze sollten wenigstens vorhanden sein, wobei durch die Federrückstellung 256 das Muffenwahlventil 220" in einer Vorzugsposition gehalten wird, die vorzugsweise einen Schieber 214 des Schaltaktuators 202 bedienen kann, der für niedrige Gänge über das Steuerungselement 216, insbesondere mit Hilfe einer Schaltmuffe, zuständig ist. Das Muffenwahlventil 220" ist ein Zwölf-Zwei-Ventil. In der Schaltstellung 220"a hat das Muffenwahlventil 220" einen ersten Durchflussweg 224 und einen zweiten Durchflussweg 226 zur Bildung einer hydraulischen Verbindung der Hydraulikzuleitung 218, 218'. Die Leitungen zwischen dem Gangschaltventil 264 und dem Muffenwahlventil 220" wird aufgefächert in das Muffenwahlventil 220" eingebracht, sodass zwei Auffächerungen mit gesperrten Wegen 260, 262 in dem Ventil 220" verschlossen sind. Hierdurch werden ein erster Arbeitsanschluss 252 und ein zweiter Arbeitsanschluss 254 auf eine erste Hälfte 210 und eine zweite Hälfte 212 des Schaltaktuators 202 geführt. Der Kolben 258 des Muffenwahlventils 220" wird gegen die Feder der Federrückstellung 256 durch den Magneten gedrückt. Der Kolben 258 kann zwei ausgewählte Stellungen einnehmen. Den Steuerungselementen 216 sind Positionierungssensoren 280, 282 zugeordnet, die die exakte Lage des Steuerungselementes 216 erheben können. Dem Muffenwahlventil 220" ist ein Gangschaltventil 264 vorgeschaltet. Einige der Ports 228, 230, 232, 234, 236, 238, 240, 242, nämlich die Ports 230, 234, 238, 242 sind auf den Druckölsumpf 102 geführt. Die Durchflusswege 224, 226 können je nach Stellung des Gangschaltventils 264 ebenfalls auf den Druckölsumpf 102 geführt werden. Das Gangschaltventil 264 ist ein mit einem Magneten 266 ausgestattetes Proportional-Regelventil. Das Proportional-Regelventil ist mit einer Federrückstellung 268 ausgestattet, damit eine der Schaltstellungen 264a, 264b, 264c, 264d eine Ruhestellung 274 des Gangschaltventils 264 sein kann. Das Gangschaltventil 264 bietet vier Stellungen 264a, 264b, 264c, 264d an. Eine der Schaltstellungen, die Schaltstellung 264d, ist eine Wegeumkehr-Stellung 272. Eine der Schaltstellungen, nämlich die Schaltstellung 264a, ist eine Schwimm-Stellung 270. Dem Gangschaltventil 264 ist ein weiteres Proportional-Regelventil vorgeschaltet. Das weitere Proportional-Regelventil ist ein Druckregler 276. Der Druckregler 276 ist als Drei/Zwei-Proportional-Regelventil mit Federvorspannung und hydraulischer Rückkopplung realisiert. An dem Druckregler 276 ist die Zentralversorgungsleitung 124 angeschlossen. Über eine elektrische Ansteuerung des Druckreglers 276 wird der Arbeitsdruck, hydraulisch stabilisiert durch die hydraulische Rückkoppelung, für das Gangschaltventil eingestellt. Über die elektrische Ansteuerung des Elektromagneten 266 des Gangschaltventils 264 kann eine der Schaltstellungen 264a, 264b, 264c, 264d ausgewählt werden. Findet keine Ansteuerung des Elektromagneten 266 des Gangschaltventils 264 statt, so drückt die Feder der Federrückstellung 268 den Kolben des Gangschaltventils 264 in die Schaltstellung 264a, die die Schwimm-Stellung 270 ist. Von der Schwimm-Stellung 270 kann in die erste Durchflussstellung 264c gewechselt werden. Aus der Durchflussstellung 264c kann sowohl in die erste Sperrstellung, der ersten Schaltstellung 264a, gewechselt werden, wie auch in eine zweite Sperrstellung 264b. Aus der zweiten Sperrstellung 264 kann in die erste Durchflussstellung 264c oder in eine zweite Durchflussstellung 264d gewechselt werden. Die zweite Durchflussstellung 264d ist eine Umkehr-Stellung 272, durch die das Steuerungselement 216 in eine veränderte Gangeinlegeposition verbracht werden kann. Soll die gewählte Position des Steuerungselementes 216 beibehalten werden, so ist die zweite Sperrstellung 264b einzunehmen. Alternativ kann eine Entlastung des Schaltaktuators 202 oder des Schaltaktuators 204 eingenommen werden. Eine weitere Gangposition, durch eine Bewegung des Steuerungselements 216 mit Vergrößerung der ersten Hälfte 210 des Schaltaktuators 202 und Verringerung der zweiten Hälfte 212 des Schaltaktuators 202, genauer der hydraulischen Kammern, die durch den Schieber 214 getrennt sind, erfolgt durch die Schaltstellung 264c. Die exakte Stellung der Steuerungselemente 216 wird mit den Positionierungssensoren 280, 282 erhoben. Diese Sensoren 280, 282 sind als Hallsensoren dargestellt. Alternativ können sie auch berührende Sensoren sein, die die Stellung des Schiebers 214 in dem Schaltaktuator 202 und des Schiebers 214 im Schaltaktuator 204 erheben. Wenn keines der beiden Ventile, Gangschaltventil 264 und Muffenwahlventil 220", elektrisch angesteuert ist, drücken die jeweiligen Federrückstellungen 256 und 268 die Kolben wie den Kolben 258 in die erste Schaltstellung 220"a. Der Schaltaktuator 204 verliert sein Öl in Richtung zu dem Druckölsumpf 102. Der andere Schaltaktuator 202 entlastet ebenfalls zu dem Druckölsumpf 102 auf Grund der Schaltstellung 264a. Unabhängig von dem eingestellten Druck des Druckreglers 276 wird kein Drucköl von der Zentralversorgungsleitung 124 zu irgendeinem der Schaltaktuatoren 202, 204 durchgeleitet. Soll der Gang durch den Schaltaktuator 202 eingelegt werden, der sich in der linken Anordnung an dem Steuerungselement 216 angreifenden Synchronisierung (nicht dargestellt) liegt, so wird die erste Durchflussstellung 264c des Gangschaltventils 264 eingenommen und das Drucköl von der Zentralversorgungsleitung 124 gelangt über den Druckregler 276 und dem Gangschaltventil 264 in der ersten Durchflussstellung 264c und dem Muffenwahlventil 220" in die Hydraulikkammer, die der ersten Hälfte 210 des Schaltaktuators 202 zugehört. Wenn ein Umschalten von dem einen Gang an dem Schaltaktuator 202 auf den anderen Gang an dem Schaltaktuator 202 durchgeführt werden soll, wird das Gangschaltventil 264 über die Sperrstellung 264b in die Umkehr-Stellung 272 gebracht. Die zweite Hälfte 212 des Schaltaktuators 202, insbesondere der hydraulische Raum in dem Schaltaktuator 202, wächst an. Die Schaltbewegungen des Steuerungselements 216 werden von dem Positionierungssensor 280 erhoben und können an ein Steuergerät für das Getriebe (nicht in Figur 3 dargestellt) weitergemeldet werden.

Sollte ein Fehlerfall identifiziert werden, z. B. ein teilweiser Ausfall der hydraulischen Schaltung aufgrund eines Ausfalls einzelner Ventile, so kann je nach Fehlerfall entweder noch ein niedriger Gang über den Schaltaktuator 202 eingelegt werden oder alternativ das Teilgetriebe, das durch die beiden Schaltaktuatoren 202, 204 angesteuert wird, durch den Druckregler 276 oder durch das Gangschaltventil 264 still gesetzt werden.

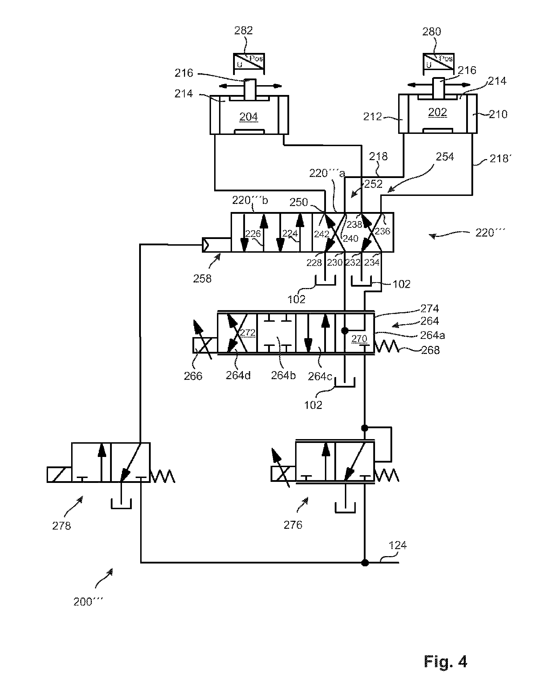

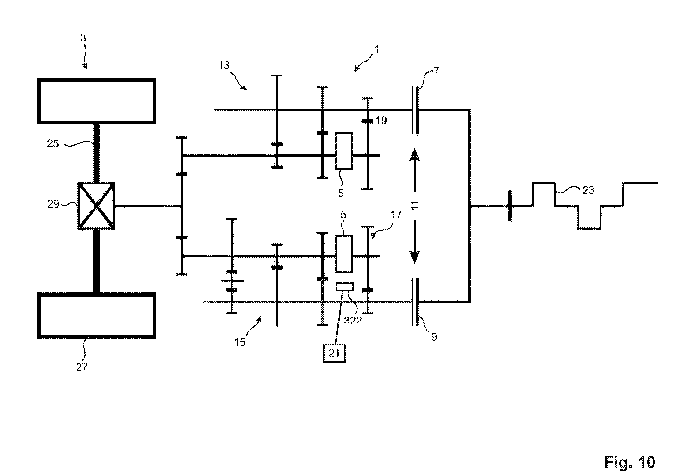

In Figur 4 ist eine weitere Ausführungsform einer Gangsteuerung 200'" in vereinfachter Form abgebildet. Die Gangsteuerung 200'" bezieht die Versorgung mit dem Hydraulikmittel aus der Zentralversorgungsleitung 124. An der Zentralversorgungsleitung 124 sind der Druckregler 276 und das Vorsteuerventil 278 angeschlossen. Das Vorsteuerventil 278 ist ein "schwarz-weiß-Ventil". Das Ventil, das die Druckregelfunktion als Druckregler 276 wahrnimmt, ist ein Proportional-Regelventil. Das Vorsteuerventil 278 ist an das Muffenwahlventil 220'" zur Schaltstellungsverstellung des Muffenwahlventils 220'" angebunden. Der Druckregler 276 versorgt mit einem Hydraulikmittel mit einem geregelten Druck das Gangschaltventil 264. Das Gangschaltventil 264 bestimmt den Ölzufluss zu dem Muffenwahlventil 220"'. An dem Muffenwahlventil 200'" sind zwei Schaltaktuatoren 202, 204 angeschlossen. Die Schaltaktuatoren 202, 204 bilden jeweils ein Teil eines Steuerungselements 216, mit denen Gänge eines Teilgetriebes ein- und ausgelegt werden können. Für die Gangwahl wird ein Schieber 214 des einen Schaltaktuators 202 oder des anderen Schaltaktuators 204 in eine von wenigstens zwei, vorzugsweise drei Positionen gebracht. Die Positionen der Schaltaktuatoren 202, 204 können mit Hilfe der Positionierungssensoren 280, 282 erhoben werden. Die Schaltaktuatoren 202, 204 sind mit als Gleichlaufzylindern arbeitenden Schiebern 214 ausgestattet, die die Steuerungselemente 216 in drei Positionen dadurch stellen können, dass das Hydraulikmittel entweder auf die erste Hälfte 210 oder die zweite Hälfte 212 des jeweiligen Schaltaktuators 202 über die Hydraulikzuleitung 218, 218' aufgebracht wird. Dies kann je nach Stellung des Gangschaltventils 264 so erfolgen, dass entweder die Kammer, die der Hälfte 210 des Schaltaktuators 202 zugeordnet ist, anwächst oder dass die Kammer, die der Hälfte 212 zugeordnet ist, anwächst. Für das Anwachsen der einen Kammer oder der anderen Kammer der jeweiligen Hälfte 210, 212 bietet das Gangschaltventil 264 zwei Durchflussstellungen 264c, 264d an. Soll der Schieber 214 in einer einmal eingenommen Position, z. B. beidseitig hydraulisch eingespannt, verharren, so bietet das Gangschaltventil 264 eine Sperrstellung 264b. In der Sperrstellung 264b sind alle Ports des Gangschaltventils 264 abgekoppelt. Es kann kein Ölfluss mehr in die, noch aus den Hälften 210, 212 des Schaltaktuators 202 bzw. 204 erfolgen. Über das Muffenwahlventil 220'" mit den beiden Schaltstellungen 220"'a, 220"'b wird die Wahl getroffen, ob die Einstellung des Gangschaltventils 264 auf den ersten Aktuator 202 oder auf den zweiten Aktuator 204 einwirken soll. Der jeweils andere Aktuator 204, 202 lässt das in ihm befindliche Hydraulikmittel den Druckölsumpf 102 bzw. in die Druckölsümpfe 102 ab. Für das Ablassen und das Auffüllen der Hälften 210, 212 eines Schaltaktuators 202, 204 hat das Muffenwahlventil 220'" Durchflusswege 224, 226. Die Ports 236, 240, an denen die Arbeitsanschlüsse 252, 254 für den Schaltaktuator 202 freigeschaltet sind, lassen das Hydraulikmittel in den Hydraulikzuleitungen 218, 218' abfließen. Das Hydraulikmittel fließt in dieser Stellung durch die Hydraulikzuleitungen 218, 218'. Das Hydraulikmittel gelangt in den Druckölsumpf 102. Die Durchflussverbindungen von den Ports 230, 234 auf die Ports 238, 242 lassen je nach Stellung des Gangschaltventils 264 das Hydraulikmittel in den anderen Schaltaktuator 204 einströmen. Die Ports 228 und 232 stellen die Verbindungen zu dem Öldrucksumpf 102 dar. Die Ventile 264, 276, 278 sind jeweils Feder vorgespannt, z. B. durch die Federrückstellung 268. Der Kolben 258 des Muffenwahlventils 220'" kann zwei definierte Positionen 220"'a, 220"'b einnehmen. In der einen Position werden die Durchflusswege 224, 226 zu dem Schaltaktuator 202 freigegeben. In der anderen Position werden die Durchflusswege von den Ports 230, 234 zu den Ports 242, 238 freigegeben, damit der Schaltaktuator 204 bewegt werden kann. Der Elektromagnet 266 des Gangschaltventils 264 bewegt das Ventil gegen die Federrückstellung 268 aus der Schwimmstellung 270, die mit der Ruhestellung 274 zusammenfällt. Das Muffenwahlventil 220'" schaltet aufgrund seines hydraulischen Vorsteuerventils 278 besonders schnell. Ein schlupfender Übergang von einem Gang in den nächsten Gang der Teilgetriebe 13, 15 (siehe Figur 10) ist möglich. Steht das Gangschaltventil 264 in der Umkehrstellung 272, kann der in einer mittleren oder linken Schaltstellung stehende Schieber 214 des Aktuators, wie der Aktuator 202 oder 204, in eine rechte Position verfahren werden. Der Magnet 266 kann so betrieben werden, dass das Gangschaltventil 264 als Proportional-Regelventil arbeiten kann.

Verringert sich der Druck der Druckölversorgung, sodass auf der Zentralversorgungsleitung 124 nur noch ein geringer Druck anliegen sollte, so kann der Druckregler 276 die Zentralversorgung 124 von dem Gangschaltventil 264 abkoppeln und ein niedriger Gang des Teilgetriebes 13, 15 (siehe Figur 10) lässt sich noch immer durch ein Zusammenspiel des Gangschaltventils 264 und des Muffenwahlventils 220'" einlegen. Die Hydrauliksteuerung 100, 100' (gem. Figuren 1, 2) gelangt in einen sicheren Betriebszustand, dank eines ausreichend dimensionierten Speichers.

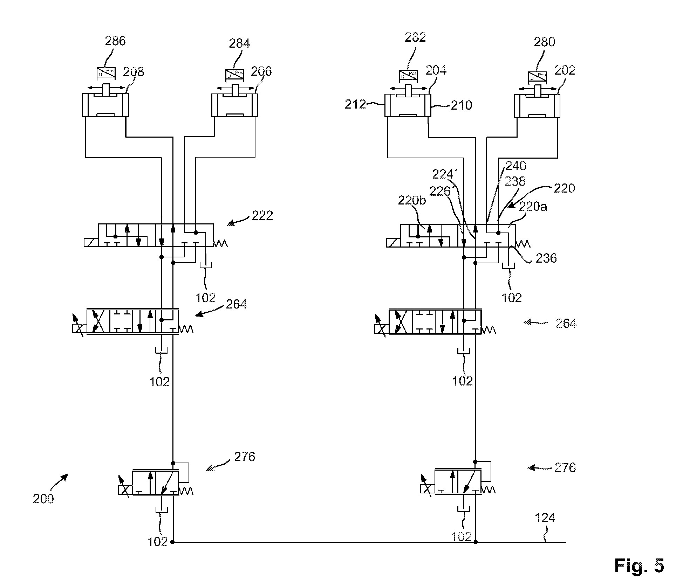

In Figur 5 wird die Gangsteuerung 200 mit vier Schaltaktuatoren 202, 204, 206, 208, d. h. mit der Möglichkeit bis zu acht Gängen zu schalten, gezeigt. Die Stellung jedes einzelnen Schaltaktuators 202, 204, 206, 208 lässt sich über Positionierungssensoren 280, 282, 284, 286 ermitteln und kann an die Steuerungseinheit 21 (siehe Figur 10) weitergegeben werden, die für die Ansteuerung der Magneten der Ventile, wie die Muffenwahlventile 220, 222 und die Gangschaltventile 264, verantwortlich ist. Das Gangschaltventil 264 gibt vor, ob Hydraulikmittel in den Druckölsumpf 102 zurückgeführt werden soll, oder ob Hydraulikmittel von dem Druckregler 276 in die Schaltaktuatoren 202, 204, 206, 208 gelangen soll. Über die Muffenwahlventile 220, 222 wird für jedes Teilgetriebe 13, 15 (siehe Figur 10) festgelegt, wessen Schaltaktuator 202, 204, 206, 208 tatsächlich angesteuert werden soll. Weil pro Muffenwahlventil 220, 222 zwei Schaltaktuatoren 202, 204, 206, 208 angesteuert werden sollen, bietet ein Muffenwahlventil 220 zwei Schaltstellungen 220a, 220b. Für das Ablassen und das Auffüllen der Hälften 210, 212 eines Schaltaktuators 202, 204 hat das Muffenwahlventil 220 Durchflusswege 224', 226'. In jeder Schaltstellung 220a, 220b wird das Hydraulikmittel in den einzelnen Ports des nicht zu schaltenden Schaltaktuators in einer Schwimmstellung Richtung Druckölsumpf 102 abgeleitet. Die beiden benachbarten Ports werden an das jeweilige Gangwahlventil 264 angeschlossen. Das Hydraulikmittel wird zentral über die Zentralversorgungsleitung 124 zur Verfügung gestellt. Die Ports 236, 238, 240 bilden miteinander eine Verbindung, die als Schwimmstellung bezeichnet werden kann.

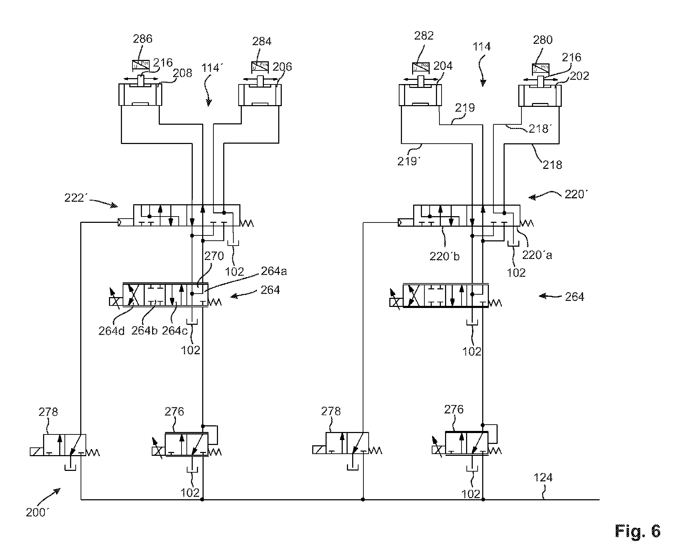

In Figur 6 wird eine Gangsteuerung 200' gezeigt, die in wesentlichen Teilen der Gangsteuerung 200 nach Figur 5 entspricht. Die Gangsteuerung 201' hat ebenfalls vier Schaltaktuatoren 202, 204, 206, 208, deren exakte Position über die Positionierungssensoren 280, 282, 284, 286 eingestellt werden können. Über die Ölkreisläufe 114, 114' werden unter Nutzung der Hydraulikzuleitung 218, 218' die Schaltaktuatoren 202, 204, 206, 208 so eingestellt, dass über die Steuerungselemente 216 die daran anzuschließenden Schaltmuffen (nicht dargestellt) einen Gang ein- und auslegen können. Das Muffenwahlventil 220' hat zwei Schaltzustände 220'a, 220'b. Während in dem Schaltzustand 220'a das Hydraulikmittel aus der Hydraulikzuleitung 218, 218' für den Schaltaktuator 202 in Richtung auf den Druckölsumpf 102 abgeleitet werden kann, wird der Schaltaktuator 204 über die beiden Leitungen 219, 219' aus dem Gangschaltventil 264 eingestellt. Das Gangschaltventil 264 bezieht sein Hydraulikmitttel aus dem Druckregler 276. Nicht nur der Druckregler 276, sondern auch das Vorsteuerventil 278 liegt auf der Zentralversorgungsleitung 124. Die Zentralversorgungsleitung 124 liefert Hydraulikmittel an die Druckregler 276 und an die Vorsteuerventile 278. Über die Vorsteuerventile 278, die elektromagnetisch angesteuert werden können, kann das jeweilige Muffenwahlventil 220', 222' zwischen seinen Positionen, wie der Schaltstellung 220'a und der Schaltstellung 220'b, hin- und hergeschaltet werden. Das Gangschaltventil 264 weist vier verschiedene Schaltpositionen 264a, 264b, 264c und 264d auf. Mit der Schaltstellung 264a wird der über das Muffenwahlventil 220' bzw. 222' angesteuerte Schaltaktuator 202, 204, 206, 208 Richtung Druckölsumpf entlastet. Eine Schaltposition 264a bietet die Schwimmstellung 270. Über die Schaltstellung 264c wird der ausgewählte Schaltaktuator 202, 204, 206, 208 einseitig mit Druck, das bedeutet eine der beiden Kammern des Gleichgangzylinders des Schaltaktuators 202, 204, 206, 208 mit Hydraulikmittel versorgt. In der Schaltstellung 264d wird die gegenüberliegende Seite mit dem Hydraulikmittel versorgt. Durch die Schaltstellung 264b bleibt der ausgewählte Schaltaktuator 202, 204, 206, 208 in dem "eingefrorenen" Zustand. Figur 7 zeigt an der gleichen Zentralversorgungsleitung 124 angeschlossene weitere Ölkreisläufe, wie die Kupplungssteuerung 300. Das Öl in der Zentralversorgungsleitung 124 muss zunächst durch den Filter 332. Der Filter 332 hat die Funktion eines Eingangsfilters. An den Filter 332 schließt sich der Kupplungsregler 306, 308 an, der ein Proportional-Regelventil ist. Der Kupplungsregler 306 wird durch den Elektromagneten 310 eingestellt. Der Elektromagnet 310 drückt auf den Ventilkolben 312, der in der Gegenrichtung durch die Rückkopplungsleitung 314 vorgespannt ist. Durch die Rückkopplungsleitung 314 wird eine stabile Druckregelung in dem Kupplungsdruckregler 306 eingestellt. Ein weiterer Filter 334 befindet sich in der Zuleitung zu den Hydraulikzylindern 302, 304. Der Filter 334 filtert als Druckregelfilter das Hydraulikmittel, bevor es über die Drossel 330 in den Speicher 326 gelangen kann. Der Speicher 326 ist ein federvorgespannter Speicher. In der Leitung für den Hydraulikzylinder 304 ist ein Speicher 328 eingebaut, der ein Druckerhaltungsspeicher ist. Eine Stabilisierung und Schwingungsreduzierung wird mit Hilfe der Drossel 330 sichergestellt. Die Hydraulikzylinder 302, 304 können nur betätigt werden, wenn die Schalteinrichtungen 316, 318 aktiv angesteuert werden, ohne entsprechende Ansteuerung verharren die Kolben der Schalteinrichtung 316, 318 in der Position, die durch die Federrückstellung 320 eingenommen wird. Das Ansteuern der Hydraulikzylinder 302, 304 wird durch die Positionierungssensoren 322, 324 überwacht. Die Kupplungsstrecken werden gegenüber dem Druckölsumpf 102 entlastet, sodass die jeweilige Kupplung an den Hydraulikzylindern 302, 304 nicht eingelegt werden kann.

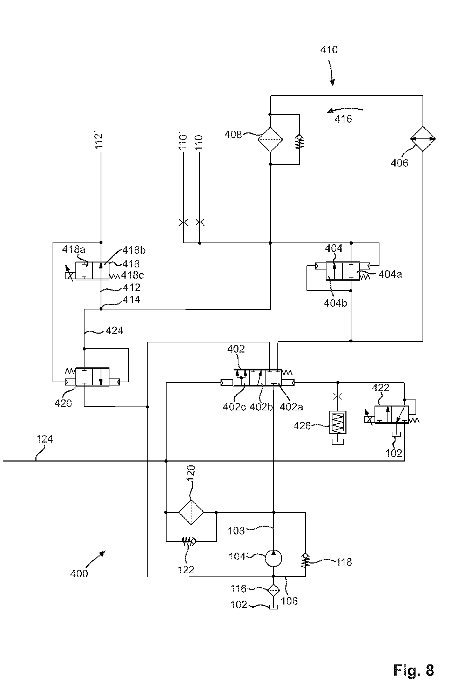

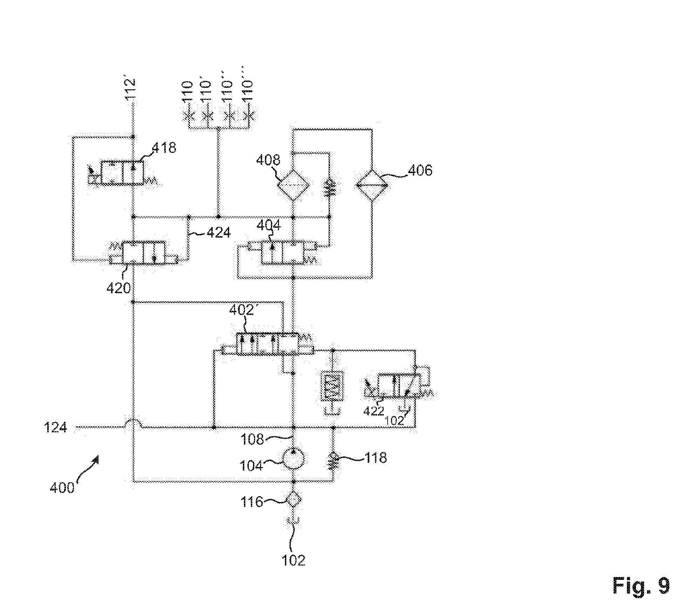

In den Figuren 8 und 9 werden Hydraulikmittelaufbereitungen 400, 400' dargestellt.

Figur 8 zeigt als zentrale Druckquelle die Öldruckpumpe 104', die z. B. eine Flügelzellenpumpe sein kann. Die Öldruckpumpe 104' pumpt Hydraulikmittel sowohl aus dem Druckölsumpf 102, wie auch, sofern das Kühlölumlaufventil 402 geöffnet sein sollte, Öl aus der Zirkulation 416. Zur Sicherheit der Öldruckpumpe 104' ist ein Überdrucksicherheitsventil 118 parallel zur Öldruckpumpe 104' geschaltet. Das Überdrucksicherheitsventil 118 verbindet im durchgeschalteten Zustand die Ansaugseite 106 der Öldruckpumpe 104' mit der Pumpenableitung 108. Das unter Druck stehende Hydraulikmittel in der Pumpenableitung 108 kann in verschiedene Richtungen strömen. Zum einen kann es über den Druckölfilter 120, der die Funktion eines zentralen Ölversorgungsfilters hat, in die Zentralversorgungsleitung 124 gelangen. Zum anderen kann das Hydraulikmittel an das Druckölumlaufventil 402 gelangen. Das Druckölumlaufventil 402 bietet verschiedene Stellungen an. In einer ersten Stellung 402a wird keinerlei Hydraulikmittel durch das Druckölumlaufventil 402 an die weiterführenden Bauteile, wie den Drucköl-Wärmetauscher 406, weitergeleitet. In der zweiten Stellung 402b wird durch das Druckölumlaufventil 402 ausschließlich Öl zu dem Drucköl-Wärmetauscher 406 weitergeleitet. In der dritten Stellung 402c leitet das Druckölumlaufventil 402 einen Teil des Hydraulikmittels zurück in die Ansaugseite 106. Die Stellung des Druckölumlaufventils 402 wird durch die beiden Drücke in der Pumpenableitung 108 und stromabwärts des Hauptdruckreglers 122 eingestellt. Das Hydraulikmittel in der Zirkulation 416 wird durch die Kühlungseinrichtung 410 mit dem Drucköl-Wärmetauscher 406 geführt, wobei Abrieb des Drucköl-Wärmetauschers 406 durch den Druckölfilter 408, der als Wärmetauscherfilter bezeichnet werden kann, zurückgehalten wird. Das Schmierölstromventil 404 übernimmt die Aufgabe einer wahlweise einstellbaren Bypassleitung um den Drucköl-Wärmetauscher 406. Hierfür bietet das Schmierölstromventil 404 zwei Stellungen, eine Sperrstellung 404a und eine Durchflussstellung 404b. Das Hydraulikmittel in der Zirkulation 416 wird teilweise in die Ölkreisläufe 110, 110' gegeben. Die Ölkreisläufe 110, 110' sind für die Beölung von Radsätzen oder für die Beölung von Lagern in dem Getriebe vorhanden. Der Ölkreislauf 112', der durch das Kühlölstromventil 418 freigeschaltet werden kann ist der Ölkreislauf für die Kühlung der Kupplungen des Doppelkupplungsgetriebes. Damit keine permanente Kühlung stattfinden muss, ist das Kühlölstromventil 418 mit einer Sperrstellung 418a und einer Durchflussstellung 418b ausgestattet. Das Kühlölstromventil 418 ist ein Proportional-Regelventil, sodass die exakte Durchströmmenge durch die Kupplungen eingestellt werden kann. Vorteilhafterweise ist das Kühlölstromventil 418 am Anfang der Kupplungskühlstrecke 412, d. h. unmittelbar hinter dem Abzweig 414, angeordnet. Der Abzweig 414 dient zum einen zum Anschluss der Kupplungskühlstrecke 412, zum anderen zur Zustromseite des Kühlölumlaufventils 420. Der Hauptdruckregler 422 wird durch den Speicher 426, der drosselangebunden in der Zuleitung des Druckölumlaufventils 402 sitzt, stabilisiert. Bei entsprechendem Rückstau bzw. Druckunterschied öffnet das Kühlölumlaufventil 420 und Öl der Zirkulation 416 gelangt zurück zur Ansaugseite 106 der Öldruckpumpe 104'. Über die Zustromseite 424 des Kühlölumlaufventils 420 wird bestimmt, ob ein Teil der Zirkulation 416 wieder zu der Pumpe 104 zurückgeführt werden soll. Die fehlende Menge des Hydraulikmittels wird über den Druckölfilter 116 aus dem Druckölsumpf 102 bezogen. Die Leerlauffederkraft 418c drückt das Kühlölstromventil 418 in die Durchflussstellung 418b.

Der Hydraulikplan der Hydraulikmittelaufbereitung 400' nach Figur 9 entspricht in weiten Teilen dem Hydraulikplan nach Figur 8. Hydraulikmittel kann nur zu dem Drucköl-Wärmetauscher 406 gelangen, wenn das Druckölumlaufventil 402' den Weg dorthin freigibt. Vorrangig wird die Zentralversorgungsleitung 124 aus der Öldruckpumpe 104, die eine Kolbenpumpe ist, über die Pumpenableitung 108 versorgt. Neu nachzulieferndes Hydraulikmittel wird über den Druckölfilter 116 aus dem Druckölsumpf 102 bezogen. Ein zu hoher Druck in der Zentralversorgungsleitung 124 wird durch das Überdrucksicherheitsventil 118 vermieden. Der Druck in der Zentralversorgungsleitung 124 wird für den Hauptdruckregler 422 verwendet, der die Stellung des Druckölumlaufventils 402' gegen den Druck in der Zentralversorgungsleitung 124 einstellt. Als Abzweig hinter, d. h. abstromseitig des Druckölfilters 408 sind mehrere Zweige 110, 110', 100", 110'" für die Beölung einzelner Radsätze vorhanden. Mit Hilfe des Kühlölstromventils 418 wird bei Bedarf Kühlmittel bzw. Hydraulikmittel durch den Ölkreislauf 112', der für die Kühlung der Kupplungen zuständig ist, geleitet. Soll Druck zu der Leitung 112' abgebaut werden, so öffnet das Kühlölumlaufventil 420. Das Schmierölstromventil 404 kann eine Bypassfunktion zu dem Drucköl-Wärmetauscher 406 ausführen. Die Zustromseite 424 zu dem Kühlölumlaufventil 420 dient als Rücklaufleitung, entweder über den Ölkreislauf 112` oder über die Ansaugseite der Druckölpumpe 104.

Figur 10 zeigt in schematischer Darstellung den Radsatz eines Getriebes 1 in einem Kraftfahrzeug 3, der über Schaltmuffen 5 wahlweise einen Gang, der der ersten Kupplung 7 oder der zweiten Kupplung 9 zugeordnet ist, einlegen kann. Aufgrund der beiden Kupplungen 7, 9 handelt es sich um eine Doppelkupplungseinrichtung 11 mit zwei Teilgetrieben 13, 15. Das Getriebe 1 wird von der Kurbelwelle 23, die ein Teil des Verbrennungsmotors (nicht dargestellt) ist, angetrieben, damit über die Halbachsen 25, die über das Differential 29 verbunden sind, Antriebsleistung auf die Straßenräder weitergeleitet werden kann. Die Schaltmuffen 5 können wie zuvor in den Figuren 1 bis 6 dargelegt, zur Gangwahl ein- und ausgelegt werden. Hierfür hat die Steuerungseinheit 21 auf der einen Seite Positionierungssensoren 322, 324, mit denen die Position der Schaltmuffen 5 ermittelt werden kann, und zum anderen wird über die Steuerungseinheit 21, wie zu den Figuren 1 bis 7 erörtert, eine Ventilkombination eingestellt, damit wahlweise der eine oder andere Gang des Doppelkupplungsgetriebes ein- und ausgelegt werden kann. In dem Getriebe 1 können unterschiedliche Gänge 17, 19 durch das Schalten von Schaltmuffen eingelegt werden.

Wie aus den Beschreibungen zu entnehmen ist, zeigt die erfindungsgemäße Hydrauliksteuerung 100, 100' zahlreiche Vorteile. Es können zahlreiche Ausfälle exerziert werden, trotz alledem bleiben Grundfunktionen des Doppelkupplungsgetriebes erhalten. Ein Antrieb von der Kurbelwelle 23 auf die Straßenräder 27 durch die Halbachsen 25 und durch das Differential 29 ist weiterhin möglich. Ein so aufgebautes Getriebe 1 in der Form eines Doppelkupplungsgetriebes behält einen so genannten "Limb home mode", selbst wenn einzelne Ventile ausfallen sollten. Im Übrigen wird durch den Drucköl-Wärmetauscher und den daran angeschlossenen zahlreichen Ölkreisläufen 110, 110', 110", 110"', 112, 112', 114, 114' bedarfsgerecht gekühltes Hydraulikmittel an die Stellen und die Aktuatoren gebracht, die vorteilhaft mit gekühltem Hydraulikmittel arbeiten können. Gleichzeitig ist der Hydraulikplan recht einfach strukturiert, sodass ein so gearteter Hydraulikplan sowohl bei großvolumigen und bei leistungsstarken Antriebssträngen als auch bei Kleinwagen verbaut werden kann.

### Bezugszeichenliste:

| Bezugszeichen | Bedeutung |
|---|---|
| 1 | Getriebe |
| 3 | Kraftfahrzeug |
| 5 | Schaltmuffe |
| 7 | erste Kupplung |
| 9 | zweite Kupplung |
| 11 | Doppelkupplungseinrichtung |
| 13 | erstes Teilgetriebe |
| 15 | zweites Teilgetriebe |
| 17 | erster Gang, insbesondere eines Teilgetriebes |
| 19 | zweiter Gang, insbesondere eines Teilgetriebes |
| 21 | Steuerungseinheit |
| 23 | Kurbelwelle, insbesondere als Teil des Verbrennungsmotors |
| 25 | Halbachse |
| 27 | Straßenrad |
| 29 | Differential |
| 100, 100' | Hydrauliksteuerung |
| 102 | Druckölsumpf |
| 104 | Öldruckpumpe, insbesondere als Kolbenpumpe |
| 104' | Öldruckpumpe, insbesondere als Flügelzellenpumpe |
| 106 | Ansaugseite, insbesondere der Öldruckpumpe |
| 108 | Pumpenableitung |
| 110, 110', 110", 110'" | erster Ölkreislauf |
| 112, 112' | zweiter Ölkreislauf |
| 114, 114' | dritter Ölkreislauf, insbesondere in Form eines Aktuatorenölkreislaufes |
| 116 | Druckölfilter, insbesondere Ansaugfilter |
| 118 | Überdrucksicherheitsventil, insbesondere als federvorgespanntes Rückschlagsventil |
| 120 | Druckölfilter, insbesondere zentraler Ölversorgungsfilter |
| 122 | Bypass, insbesondere Bypassventil als Rückschlagsventil |
| 124 | Zentralversorgungsleitung |
| 200 | Gangsteuerung |
| 200' | Gangsteuerung |
| 200" | Gangsteuerung |
| 200'" | Gangsteuerung |
| 202 | erster Schaltaktuator |
| 204 | zweiter Schaltaktuator |
| 206 | dritter Schaltaktuator |
| 208 | vierter Schaltaktuator |
| 210 | erste Hälfte eines Schaltaktuators |
| 212 | zweite Hälfte eines Schaltaktuators |
| 214 | Schieber, insbesondere des Schaltaktuators |
| 216 | Steuerungselement |
| 218, 218' | Hydraulikzuleitung |
| 219, 219' | Hydraulikzuleitung |
| 220 | erstes Muffenwahlventil |
| 220' | erstes Muffenwahlventil in einer zweiten Variante |
| 220" | erstes Muffenwahlventil in einer dritten Variante |
| 220'" | erstes Muffenwahlventil in einer vierten Variante |
| 220a | erste Schaltstellung eines Muffenwahlventils 220 |
| 220b | zweite Schaltstellung eines Muffenwahlventils 220 |
| 220'a | erste Schaltstellung eines Muffenwahlventils 220' |
| 220'b | zweite Schaltstellung eines Muffenwahlventils 220' |
| 220"a | erste Schaltstellung eines Muffenwahlventils 220" |
| 220"b | zweite Schaltstellung eines Muffenwahlventils 220" |
| 220"'a | erste Schaltstellung eines Muffenwahlventils 220'" |
| 220"'b | zweite Schaltstellung eines Muffenwahlventils 220'" |
| 222 | zweites Muffenwahlventil |
| 222' | zweites Muffenwahlventil in einer zweiten Variante |
| 224, 224' | erster Durchflussweg, insbesondere des Muffenwahlventils |
| 226, 226' | zweiter Durchflussweg, insbesondere des Muffenwahlventils |
| 228 | erster Port |
| 230 | zweiter Port |
| 232 | dritter Port |
| 234 | vierter Port |
| 236 | fünfter Port |
| 238 | sechster Port |
| 240 | siebter Port |
| 242 | achter Port |
| 244 | neunter Port |
| 246 | zehnter Port |
| 248 | elfter Port |
| 250 | zwölfter Port |
| 252 | erster Arbeitsanschluss, insbesondere des Muffenwahlventils |
| 254 | zweiter Arbeitsanschluss, insbesondere des Muffenwahlventils |
| 256 | Federrückstellung, insbesondere des Muffenwahlventils |
| 258 | Kolben, insbesondere des Muffenwahlventils |
| 260 | erster gesperrter Weg |
| 262 | zweiter gesperrter Weg |
| 264 | Gangschaltventil |
| 264a | Sperrstellung, insbesondere erste Sperrstellung des Gangschaltventils |
| 264b | Sperrstellung, insbesondere zweite Sperrstellung des Gangschaltventils |
| 264c | Durchflussstellung, insbesondere erste Durchflussstellung des Gangschaltventils |
| 264d | Durchflussstellung, insbesondere erste Durchflussstellung des Gangschaltventils |
| 266 | Elektromagnet, insbesondere des Gangschaltventils |
| 268 | Federrückstellung, insbesondere des Gangschaltventils |
| 270 | Schwimm-Stellung, insbesondere des Gangschaltventils |
| 272 | Wegeumkehr-Stellung, insbesondere des Gangschaltventils |
| 274 | Ruhestellung, insbesondere des Gangschaltventils |
| 276 | Druckregler |
| 278 | Vorsteuerventil, insbesondere in Form eines Umschaltventils |
| 280 | erster Positionierungssensor |
| 282 | zweiter Positionierungssensor |
| 284 | dritter Positionierungssensor |
| 286 | vierter Positionierungssensor |
| 300 | Kupplungssteuerung |
| 302 | erster Hydraulikzylinder |
| 304 | zweiter Hydraulikzylinder |
| 306 | erster Kupplungsdruckregler |
| 308 | zweiter Kupplungsdruckregler |
| 310 | Elektromagnet, insbesondere des Kupplungsdruckreglers |
| 312 | Ventilkolben, insbesondere des Kupplungsdruckreglers |
| 314 | Rückkoppelungsleitung, insbesondere von dem Kupplungsdruckregler |
| 316 | erste Schalteinrichtung, insbesondere zwischen Kupplungsdruckregler und Hydraulikzylinder |
| 318 | zweite Schalteinrichtung, insbesondere zwischen Kupplungsdruckregler und Hydraulikzylinder |
| 320 | Federrückstellung, insbesondere in der Schalteinrichtung |
| 322 | erster Positionierungssensor für den Hydraulikzylinder |
| 324 | zweiter Positionierungssensor für den Hydraulikzylinder |
| 326 | erster Speicher, insbesondere federvorgespannter Speicher |
| 328 | zweiter Speicher, insbesondere Druckerhaltungsspeicher |
| 330 | Drossel, insbesondere in der Speicherzuleitung |
| 332 | Filter, insbesondere Eingangsfilter |
| 334 | Filter, insbesondere Druckregelfilter |
| 400 | Hydraulikmittelaufbereitung |
| 400' | Hydraulikmittelaufbereitung |
| 402 | Druckölumlaufventil |
| 402' | Druckölumlaufventil in einer zweiten Variante |
| 402a | erste Stellung, insbesondere des Druckölumlaufventil |
| 402b | zweite Stellung, insbesondere des Druckölumlaufventil |
| 402c | dritte Stellung, insbesondere des Druckölumlaufventil |
| 404 | Schmierölstromventil |
| 404a | Sperrstellung, insbesondere des Schmierölstromventils |
| 404b | Durchflussstellung, insbesondere des Schmierölstromventils |
| 406 | Drucköl-Wärmetauscher |
| 408 | Druckölfilter, insbesondere Wärmetauscherfilter |
| 410 | Kühlungseinrichtung |
| 412 | Kupplungskühlstrecke |
| 414 | Abzweig, insbesondere zum Anschluss der Kupplungskühlstrecke |
| 416 | Zirkulation |
| 418 | Kühlölstromventil |
| 418a | Sperrstellung, insbesondere des Kühlölstromventil |
| 418b | Durchflussstellung, insbesondere des Kühlölstromventil |
| 418c | Leerlauffederkraft, insbesondere des Kühlölstromventils |
| 420 | Kühlölumlaufventil |
| 422 | Hauptdruckregler |
| 424 | Zustromseite, insbesondere des Kühlölumlaufventils |
| 426 | Speicher |

## Patentansprüche

1. Getriebe (1) für ein Kraftfahrzeug (3),
das als ein mehrere Schaltmuffen (5) aufweisendes Schaltgetriebe ausgebildet ist und mit einer mehrere Kupplungen,
wenigstens eine erste Kupplung (7) mit einem ersten Hydraulikzylinder (302) und wenigstens eine zweite Kupplung (9) mit einem zweiten Hydraulikzylinder (304), umfassenden Doppelkupplungseinrichtung (11) zusammenarbeitet, wobei mit der Doppelkupplungseinrichtung (11) ein erstes Teilgetriebe (13) und ein zweites Teilgetriebe (15) des Schaltgetriebes beeinflussbar ist und jedes Teilgetriebe (13, 15) Steuerungselemente (216) mit zweiseitig hydraulisch ansteuerbaren Schaltaktuatoren (202, 204, 206, 208) zum Bewegen der Schaltmuffen (5) besitzt,
wobei jeweils zwei Schaltaktuatoren (202 und 204; 206 und 208) einem Muffenwahlventil (220, 220', 220", 220"'; 222, 222', 222", 222'") zugeordnet sind,
***dadurch gekennzeichnet, dass***
in einer ersten Stellung eines Muffenwahlventils (220a, 220'a, 220"a, 220"'a; 222a, 222'a, 222"a, 222"'a) zwei Durchflusswege (224, 226) für eine Beaufschlagung eines Schaltaktuators (202, 204, 206, 208) mit Drucköl einem ersten Schaltaktuator (202 oder 204; 206 oder 208), und zwei Wege mit Verbindung zu einem Druckölsumpf (102) einem zweiten Schaltaktuator (204 oder 202; 208 oder 206) zugeordnet sind, und in einer zweiten Stellung des Muffenwahlventils (220b, 220'b, 220"b, 220"'b; 222b, 222'b, 222"b, 222"'b) die Zuordnung umgekehrt ist.

2. Getriebe (1) nach Anspruch 1,
***dadurch gekennzeichnet, dass***
wenigstens drei Ports (236, 238, 240) des Muffenwahlventils (220, 220'; 222, 222') derart miteinander verbunden sind, dass einer der Schaltaktuatoren (202 oder 204; 206 oder 208) über eine Schwimmstellung des Muffenwahlventils (220, 220'; 222, 222') eine Verbindung zu dem Druckölsumpf (102) aufweist.

3. Getriebe (1) nach Anspruch 1 oder 2,
***dadurch gekennzeichnet, dass***
das Muffenwahlventil (220, 220', 220"; 222, 222', 222") in Form eines Ventils mit zwei Schaltstellungen (220a, 220'a, 220"a und 220b, 220'b, 220"b; 222a, 222'a, 222"a und 222b, 222'b, 222"b) und einer Federrückstellung (256) ausgebildet ist, wobei insbesondere die Federrückstellung (256) des Muffenwahlventils (220") das Muffenwahlventil, insbesondere einen Kolben (258) des Muffenwahlventils (220"), in einer Ruhestellung (220"a) hält, in der das Muffenwahlventil (220") zwei gesperrte Wege (260, 262) aufweist.

4. Getriebe (1) nach einem der vorhergehenden Ansprüche,
***dadurch gekennzeichnet, dass***
dem Muffenwahlventil (220, 220', 220", 220"'; 222, 222', 222", 222'") ein Wegeventil mit einer Sperrstellung (264b) und einer Durchflussstellung (264d) als ein Gangschaltventil (264) vorgeschaltet ist, wobei insbesondere das Gangschaltventil (264) in Form eines elektromagnetisch gesteuerten Ventils mit Federrückstellung (268), einer Schwimmstellung (270) und einer Stellung mit einer Wegeumkehrung (272) gebildet ist.

5. Getriebe (1) nach Anspruch 4,
***dadurch gekennzeichnet, dass***
die eine Schwimmstellung (270) des Gangschaltventils (264) als eine Stellung mit Verbindung zu dem Druckölsumpf (102) ausgebildet ist.

6. Getriebe (1) nach Anspruch 4 oder 5,
***dadurch gekennzeichnet, dass***
die Federrückstellung (268) des Gangschaltventils (264) mit einer Ruhestellung (274) des Gangschaltventils (264) zusammenfällt.

7. Getriebe (1) nach einem der Ansprüche 4 oder 5 oder 6,
***dadurch gekennzeichnet, dass***
dem Gangschaltventil (264) ein Druckregler (276) vorgeschaltet ist, der insbesondere als ein elektrohydraulisches Proportional-Wegeventil ausgeführt ist.

8. Getriebe (1) nach einem der vorhergehenden Ansprüche,
***dadurch gekennzeichnet, dass***
das Muffenwahlventil (220', 220"', 222', 222'") hydraulisch durch ein elektromagnetisch betätigtes Vorsteuerventil (278) betätigbar ist, das insbesondere ein Umschaltventil ist.

9. Getriebe (1) nach einem der vorhergehenden Ansprüche,
***dadurch gekennzeichnet, dass***
Positionierungssensoren (280, 282, 284, 286) zur Kontrolle der Positionierung der Schaltmuffen (5) den Schaltaktuatoren (202, 204, 206, 208) zugeordnet sind, wobei die Schaltaktuatoren (202, 204, 206, 208) insbesondere als Gleichgangzylinder ausgebildet sind.

10. Getriebe (1) nach einem der vorhergehenden Ansprüche,
***dadurch gekennzeichnet, dass***
mindestens einem Muffenwahlventil (220, 220', 220", 220"'; 222, 222', 222", 222'") Schaltaktuatoren (202, 204, 206, 208) unterschiedlicher Gänge eines Teilgetriebes (13, 15) zugeordnet sind.

11. Getriebe (1) nach einem der vorhergehenden Ansprüche,
***dadurch gekennzeichnet, dass***
dem Hydraulikzylinder (302, 304) ein Kupplungsdruckregler (306, 308) vorgeschaltet ist, wobei der Kupplungsdruckregler (306, 308) vorzugsweise in Form eines elektrohydraulischen Proportional-Wegeventils mit Federrückstellung ausgeführt ist.

12. Getriebe (1) nach Anspruch 11,
***dadurch gekennzeichnet, dass***
der Kupplungsdruckregler (306, 308) nach Art eines elektrohydraulischen Schieberventils mit einem Elektromagneten (310) und einem einseitig elektromagnetisch betätigten Ventilkolben (312) und Federrückstellung ausgeführt ist, wobei vorzugsweise der Kupplungsdruckregler (306, 308) eine Rückkoppelung mit einer Rückkoppelungsleitung aufweist, die einen in einer Druckölzuleitung zum Hydraulikzylinder (302, 304) jeweils wirkenden Druck in Form eines Referenzdrucks durch die Rückkoppelungsleitung dem Kupplungsdruckregler (306, 308) zuführt.

13. Getriebe (1) nach Anspruch 12,
***dadurch gekennzeichnet, dass***
der Kupplungsdruckregler (306, 308) unter Einfluss des Referenzdrucks dadurch steuerbar ist, dass der Kupplungsdruckregler (306, 308) eine Referenzdruckfläche aufweist, die einer Wirkung des Referenzdrucks ausgesetzt ist, wobei vorzugsweise die Referenzdruckfläche dem Ventilkolben (312) des Schieberventils zugeordnet ist.

14. Getriebe (1) nach Anspruch 13,
***dadurch gekennzeichnet, dass***
der Kupplungsdruckregler (306, 308) unter Einfluss einer aus der Höhe des Referenzdrucks und der Größe der Referenzdruckfläche ergebenden Referenzkraft dadurch steuerbar ist, dass die Referenzkraft gegen die Magnetkraft des Elektromagneten (310) des Kupplungsdruckreglers (306, 308) gerichtet ist.

15. Getriebe (1) nach einem der Ansprüche 11 bis 14,
***dadurch gekennzeichnet, dass***
zwischen dem Kupplungsdruckregler (306, 308) und dem Hydraulikzylinder (302, 304) eine Schalteinrichtung (316, 318), vorzugsweise in Form eines Ventils mit zwei Schaltstellungen und einer Federrückstellung (320), vorgesehen ist, die nach Art eines Schaltventils ausgebildet ist, das als Kupplungstrennventil arbeitet, insbesondere mit einem hydraulischen Verhalten, durch das eine Kupplungstrennung innerhalb von weniger als 0,5 Sekunden abschließbar ist,
und dass insbesondere ein hydraulischer Speicher (326, 328), vorzugsweise drosselangebunden, zwischen Kupplungsdruckregler (306, 308) und Schalteinrichtung (316, 318) ein Hydraulikmittel als Ausgleichmenge für die Betätigung oder als Schwingungsdämpfer aufnehmen und abgeben kann.

16. Getriebe (1) nach einem der vorhergehenden Ansprüche,
***dadurch gekennzeichnet, dass***
ein Positionierungssensor (322, 324), der z. B. als Drucksensor mit einer Messaufnahme in einer der Druckölzuleitungen ausgebildet ist, zur Kontrolle des Hydraulikzylinders (302, 304) der Kupplung vorgesehen ist.

17. Getriebe (1) nach Anspruch 16,
***dadurch gekennzeichnet, dass***
eine Steuerungseinheit (21) zur Erfassung und Bearbeitung von Signalen der Positionierungssensoren (280, 282, 284, 286, 322, 324) und zur Steuerung des Getriebes (1) vorgesehen ist.

18. Getriebe (1) nach einem der vorhergehenden Ansprüche,
**dadurch gekennzeichnet, dass**
die Schwimmstellung des Muffenwahlventils (220) und die Freischaltung der beiden Durchflusswege (224', 226') in dem Muffenwahlventil (220) in einer Schaltstellung (220a, 220b) des Muffenwahlventils (220), also insbesondere gleichzeitig, eingenommen werden.

19. Getriebe (1) nach einem der vorhergehenden Ansprüche
***dadurch gekennzeichnet, dass***
zur Steuerung eines Schmierölflusses ein Schmierölstromventil (404) vorgesehen ist, das vorzugsweise in Form eines hydraulisch betätigten Ventils mit einer Sperrstellung (404a) und einer Durchflussstellung (404b) ausgebildet ist.

20. Getriebe (1) wie ein Doppelkupplungsgetriebe, insbesondere nach einem der
vorhergehenden Ansprüche,
***dadurch gekennzeichnet, dass***
an einer Hochdruckseite einer Öldruckpumpe (104, 104'),
insbesondere einer verbrennungsmotorisch angetriebenen, mit synchronem Verhalten zur Drehzahl des Verbrennungsmotors mitlaufenden Öldruckpumpe (104, 104'),
mittels der ein Getriebeöl aus einem Druckölsumpf (102) angezogen dem Getriebe (1) zur Verfügung gestellt wird,
ein weiterer, eigenständiger Ölkreislauf (110, 110', 110", 110'", 112, 112') vorgesehen ist,
der nebengeordnet zu Aktuatorenölkreisläufen (114, 114') wie einem Ölkreislauf für Steuerungselemente (216) der Schaltaktuatoren (202, 204, 206, 208) eine Zirkulation (416) für einen Teil des Getriebeöls durch eine Kühlungseinrichtung (410) mit einem Drucköl-Wärmetauscher (406) vorhält, wobei stromabwärts von der Kühlungseinrichtung (410) eine Kupplungskühlstrecke (412), insbesondere an einem Abzweig (414) der Zirkulation (416), angeschlossen ist.

21. Getriebe (1) nach Anspruch 20,
***dadurch gekennzeichnet, dass***
zur Steuerung eines Kühlölflusses zu einer Kupplung ein Kühlölstromventil (418) vorgesehen ist, das insbesondere in Form eines hydraulisch oder elektromagnetisch betätigten Ventils mit einer Sperrstellung (418a) und einer Durchflussstellung (418b) ausgebildet ist und das vorzugsweise in der Kupplungskühlstrecke (412) angeordnet ist.

22. Getriebe (1) nach Anspruch 21,
***dadurch gekennzeichnet, dass***
das Kühlölstromventil (418) federvorgespannt in der Durchflussstellung solange gehalten wird, wie eine Steuerkraft zur Einnahme der Sperrstellung durch einen Kolben des Kühlölstromventils (418) geringer als eine Leerlauffederkraft (418c) ist.

23. Getriebe (1) nach einem der Ansprüche 21 oder 22,
***dadurch gekennzeichnet, dass***
zur hydraulischen Betätigung des Kühlölstromventils (418) ein Kühlölführungsventil (16) vorgesehen ist, das vorzugsweise in Form eines rückgekoppelten elektrohydraulischen Proportional-Wegeventils ausgebildet ist.

24. Getriebe (1) nach einem der vorhergehenden Ansprüche
***dadurch gekennzeichnet, dass***
zur Regulierung eines gesamten Druckölflusses in dem Getriebe (1) ein Hauptdruckregler (422) vorgesehen ist, der vorzugsweise in Form eines rückgekoppelten elektrohydraulischen Ventils ausgebildet ist, an das vorzugsweise ein Anschluss zur Bestimmung einer Stellung eines weiteren Ventils wie einem Druckölumlaufventil (402, 402') angebunden ist.

25. Getriebe (1) nach Anspruch 24,
***dadurch gekennzeichnet, dass***
zur Stabilisierung des gesamten Druckölflusses in dem Getriebe (1) das Druckölumlaufventil (402, 402') wenigstens ein Drei-Stellungsventil ist mit einer ersten Stellung (402a), in der eine Zuleitung zu dem Drucköl-Wärmetauscher (406) unterbrochen ist, mit einer zweiten Stellung (402b), in der das unter Druck stehende Drucköl zu dem Drucköl-Wärmetauscher (406) gelangt, und mit einer dritten Stellung (402c), in der ein Teil des geförderten Drucköls zu einer Ansaugseite (106) der Öldruckpumpe (104, 104') gelangt, während für einen weiteren Teil des Drucköls eine Verbindung von der Öldruckpumpe (104, 104') zu dem Drucköl-Wärmetauscher (406) hergestellt ist, wobei das Druckölumlaufventil (402, 402') vorzugsweise in Form eines hydraulisch durch den Hauptdruckregler (422) und eine Pumpenableitung (108) betätigten Ventils ausgebildet ist.

26. Getriebe (1) nach einem der Ansprüche 18 bis 25,
***dadurch gekennzeichnet, dass***
das Schmierölstromventil (404) und das Kühlölstromventil (418) dem Druckölumlaufventil (13) nachgeschaltet sind.

27. Getriebe (1) nach einem der Ansprüche 21 bis 26,
***dadurch gekennzeichnet, dass***
zur Umleitung des Kühlölflusses zu einer Ansaugseite (106) der Öldruckpumpe (104, 104') bei einem vorhandenen Druckunterschied über das Kühlölstromventil (418) ein Kühlölumlaufventil (420) vorgesehen ist, wobei vorzugsweise das Kühlölumlaufventil (420) in Form eines hydraulisch betätigten Ventils mit einer Sperrstellung und einer Durchflussstellung ausgebildet ist, wobei durch Vergleich eines Öldrucks an einer Zustromseite (424) zu dem Kühlölumlaufventil (420) und eines Öldrucks in der Kupplungskühlstrecke (412) eine Ventilstellung des Kühlölumlaufventils (420) einstellbar ist.

28. Muffenwahlventil (220, 220', 220", 220"'; 222, 222', 222", 222'") mit zwei Schaltstellungen (220a, 220'a, 220"a, 220"'a und 220b, 220'b, 220"b, 220"'b; 222a, 222'a, 222"a, 222"'a und 222b, 222'b, 222"b, 222"'b) und
wenigstens acht Ports (228, 230, 232, 234, 236, 238, 240, 242, 244, 246, 248, 250) zur Schaffung von hydraulischen Anschlüssen, insbesondere zur Verwendung in einem Getriebe (1) für ein Kraftfahrzeug (3) wie einem Doppelkupplungsgetriebe nach einem der vorhergehenden Ansprüche,
wobei das Getriebe (1) als ein mehrere Schaltmuffen (5) aufweisendes Schaltgetriebe ausgebildet ist und mit einer mehrere Kupplungen,
wenigstens eine erste Kupplung (7) mit einem ersten Hydraulikzylinder (302) und wenigstens eine zweite Kupplung (9) mit einem zweiten Hydraulikzylinder (304), umfassenden Doppelkupplungseinrichtung (11) zusammenarbeitet, wobei mit der Doppelkupplungseinrichtung (11) ein erstes Teilgetriebe (13) und ein zweites Teilgetriebe (15) des Schaltgetriebes beeinflussbar ist und
jedes Teilgetriebe (13, 15) Steuerungselemente (216) mit zweiseitig hydraulisch ansteuerbaren Schaltaktuatoren (202, 204, 206, 208) zum Bewegen der Schaltmuffen (5) besitzt,
wobei jeweils zwei Schaltaktuatoren (202 und 204; 206 und 208) einem Muffenwahlventil (220, 220', 220", 220"'; 222, 222', 222", 222'") zugeordnet sind,
***dadurch gekennzeichnet, dass***
das Muffenwahlventil (220, 220', 220", 220'"; 222, 222', 222", 222"'), insbesondere in Form eines Schieberkolben umfassenden Zwei-Stellungsventils, in einer Schaltstellung (220a, 220'a, 220"a, 220"'a; 222a, 222'a, 222"a, 222"'a, 222b; 220b, 220'b, 220"b, 220"'b; 222b, 222'b, 222"b, 222"'b) zwei Druckdurchflusswege von mindestens einem zur Herstellung einer Verbindung zu einer Druckölquelle vorgesehenen Druckanschluss und zwei Entspannungsdurchflusswege zu mindestens einem zur Herstellung einer Verbindung zu einem Druckölsumpf (102) vorgesehenen Entspannungsanschluss aufweist.

29. Muffenwahlventil (220, 222) nach Anspruch 28
***dadurch gekennzeichnet, dass***
in einer ersten Schaltstellung des Muffenwahlventils (220"a) die Druckdurchflusswege zu Arbeitsanschlüssen (252, 254) zugeordnet sind, die für den Anschluss eines ersten Schaltaktuators (202) vorgesehen sind, und die Entspannungsdurchflusswege zu Arbeitsanschlüssen zugeordnet sind, die für den Anschluss eines zweiten Schaltaktuators (204) vorgesehen sind, und in einer zweiten Stellung des Muffenwahlventils (220"b) die Zuordnung umgekehrt ist.

30. Muffenwahlventil (220, 222) nach Anspruch 28 oder 29
***dadurch gekennzeichnet, dass***
eine innere Verbindung zwischen den Entspannungsdurchflusswegen mit Bildung einer Schwimmstellung vorgesehen ist.

31. Verfahren zum Gangwechsel eines Getriebes (1) unter Last, das für ein Kraftfahrzeug (3) geeignet ist, insbesondere eines Getriebes (1) mit einem Muffenwahlventil
(220, 220', 220", 220"'; 222, 222', 222", 222'") nach Anspruch 28 oder 29 oder 30, vorzugsweise eines Getriebes (1) nach einem der Ansprüche 1 bis 27,
***dadurch gekennzeichnet, dass***
eine gleichzeitige Entspannung von Hydraulikzuleitungen (218, 218'), die eine Verbindung zu einer ersten und einer zweiten Hälfte (210 und 212) eines zweiseitig hydraulisch ansteuerbaren Schaltaktuators (202, 206) bilden, gegenüber einem Druckölsumpf (102) bei Einnahme einer Schaltstellung (220"a, 222"'a) eines Muffenwahlventils (220, 220', 220", 220"', 222, 222', 222", 222'") durchgeführt wird.

32. Verfahren nach Anspruch 31,
***dadurch gekennzeichnet, dass***
eine gleichzeitige Entspannung von Hydraulikzuleitungen (218, 218') untereinander und gegenüber einem Druckölsumpf (102) durch eine innere Verbindung der Hydraulikleitungen in einem Muffenwahlventil (220, 220'; 222, 222') bei Einnahme einer Schaltstellung (220a, 220'a, 220b, 220'b; 222a, 222'a, 222b, 222'b) durchgeführt wird.

33. Verfahren nach Anspruch 31 oder 32,
***dadurch gekennzeichnet, dass***
mittels einer Ölflusssteuerung, insbesondere unter Nutzung des Muffenwahlventils (220, 220', 220", 220"'; 222, 222', 222", 222"'), eine gleichzeitige Aufschließung von Hydraulikzuleitungen (219, 219') zu den Hälften (210, 212) eines zweiseitig hydraulisch ansteuerbaren Schaltaktuators (202, 204, 206, 208) gegenüber einem Gangschaltventil (264) durchgeführt wird.
